(19) Europäisches Patentamt
European Patent Office
Office européen des brevets

(11) **EP 4 510 510 A1**

(12) **EUROPEAN PATENT APPLICATION**
published in accordance with Art. 153(4) EPC

(43) Date of publication:
**19.02.2025 Bulletin 2025/08**

(21) Application number: **23802850.0**

(22) Date of filing: **08.05.2023**

(51) International Patent Classification (IPC):
**H04L 12/28** (2006.01)

(52) Cooperative Patent Classification (CPC):
**G06Q 10/063; G06Q 10/0631; G06Q 50/40;
H04L 12/28; H04L 41/0806; H04L 41/12**

(86) International application number:
**PCT/CN2023/092748**

(87) International publication number:
**WO 2023/217080 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.05.2022 CN 202210509866**

(71) Applicant: **Huawei Technologies Co., Ltd.
Shenzhen, Guangdong 518129 (CN)**

(72) Inventors:
• **ZHAO, Wenlu
Shenzhen, Guangdong 518129 (CN)**
• **LI, Changlu
Shenzhen, Guangdong 518129 (CN)**
• **BAO, Dewei
Shenzhen, Guangdong 518129 (CN)**
• **TAO, Liang
Shenzhen, Guangdong 518129 (CN)**
• **HE, Cong
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **NETWORKING METHOD, NETWORKING APPARATUS, AND ELECTRONIC DEVICE AND STORAGE MEDIUM**

(57) This application discloses a networking method, a networking apparatus, an electronic device, and a storage medium, applied to the field of network communication technologies. The electronic device obtains a networking requirement. The networking requirement includes a scene requirement, a coverage requirement, a device capability requirement, and a matching requirement between upstream and downstream devices. The electronic device obtains a networking structure based on the scene requirement, determines, based on the coverage requirement, the device capability requirement, and the matching requirement, a model of a device at each layer in the networking structure and a quantity corresponding to the model, and connects devices at two adjacent layers in the networking structure to generate a networking solution. In this way, less manual intervention is involved in device selection, networking topology, and the like in network deployment, so that efficiency of the device selection and networking topology generation is improved, to improve efficiency of the network deployment.

FIG. 2

**Description**

This application claims priority to Chinese Patent Application No. 202210509866.X, filed with the China National Intellectual Property Administration on May 11, 2022 and entitled "NETWORKING METHOD, NETWORKING APPARATUS, ELECTRONIC DEVICE, AND STORAGE MEDIUM", which is incorporated herein by reference in its entirety.

**TECHNICAL FIELD**

The present invention relates to the field of network communication technologies, and in particular, to a networking method, a networking apparatus, an electronic device, and a storage medium.

**BACKGROUND**

Network deployment usually includes solution design, material purchase, networking setup, configuration deployment, and other steps. The solution design phase includes service planning, wireless network planning, device selection, networking topology, configuration design, design document writing, and other work to be carried out. The entire phase of network planning is complex, and each piece of work is labor-consuming. Consequently, the network deployment has low efficiency and high labor costs.

**SUMMARY**

This application provides a networking method, a networking apparatus, an electronic device, and a storage medium, so that a networking solution may be generated depending on a networking requirement, to improve efficiency of network deployment.

A first aspect of this application provides a networking method. The method may be applied to an electronic device. The electronic device obtains a networking requirement. The networking requirement includes a scene requirement, a coverage requirement, a device capability requirement, and a matching requirement between upstream and downstream devices. The electronic device obtains a networking structure based on the scene requirement, determines, based on the coverage requirement, the device capability requirement, and the matching requirement, a model of a device at each layer in the networking structure and a quantity corresponding to the model, and connects devices at two adjacent layers in the networking structure to generate a networking solution.

In this solution, the electronic device may automatically generate the networking solution based on the networking requirement. In this way, less manual intervention is involved in device selection networking topology, and the like in network deployment, so that efficiency of the device selection and networking topology generation is improved, to improve efficiency of the network deployment. In addition, the networking requirement further includes the matching requirement between the upstream and downstream devices. This helps avoid a problem such as capability mismatching between the upstream and downstream devices that are connected in the networking solution, and can improve a capability of collaboration between the upstream and downstream devices, to help improve overall performance of the networking solution.

In a possible implementation, the device capability requirement includes a first device capability subrequirement and a second device capability subrequirement. The first device capability subrequirement indicates a capability requirement of a device at a first layer in the networking structure. The second device capability subrequirement indicates a capability requirement of a device at another layer other than the device at the first layer in the networking structure. The electronic device determines, based on the coverage requirement and the first device capability subrequirement, a model of the device at the first layer and a quantity of devices corresponding to the model of the device at the first layer, and determines, based on the model of the device at the first layer, the quantity of devices corresponding to the model of the device at the first layer, the second device capability subrequirement, and the matching requirement, a model of the device at the another layer and a quantity of devices corresponding to the model of the device at the another layer.

In this implementation, the electronic device first determines, based on the coverage requirement and the first device capability subrequirement of the device at the first layer, a recommended model of the device at the first layer and a quantity of devices corresponding to each recommended model. Then, the electronic device determines, based on each model of a downstream device (starting from the device at the first layer) and a quantity corresponding to each model, a second device capability subrequirement of an upstream device, and a matching requirement between the upstream device and the downstream device, a recommended model of the upstream device and a quantity of devices corresponding to each recommended model. In this way, a device that is at each layer and that is determined in a manner of layer-by-layer matching has a higher matching degree between upstream and downstream devices. This helps avoid a problem such as capability mismatching between the upstream and downstream devices.

In a possible implementation, the electronic device determines a quantity of devices at the first layer based on the coverage requirement, and determines, based on the quantity of devices at the first layer and the first device capability subrequirement of the device at the first layer, one or more models of the device at the first layer and a quantity of devices corresponding to each of the one or more models of the device at the first layer.

In this implementation, the coverage requirement determines a requirement of a user on the quantity of devices at the first layer. One or more recommended models of the device at the first layer and a quantity of devices corresponding to each recommended model may be determined based on the requirement of the user on the quantity of devices at the first layer and the first device capability subrequirement of the device at the first layer, so that a recommended model of the device at the another layer and a quantity of devices corresponding to the recommended model are subsequently determined based on the one or more recommended models of the device at the first layer and the quantity of devices corresponding to each recommended model.

In a possible implementation, the electronic device obtains user feedback information and popularity information of a device of each model in a set of available devices, and determines, based on the coverage requirement, the device capability requirement, the matching requirement, the user feedback information, and the popularity information, the model of the device at each layer in the networking structure and the quantity corresponding to the model.

In this implementation, when determining the model of the device at each layer and the quantity corresponding to the model, the electronic device further considers user feedback information and popularity information, that are of each model of the device at each layer, in addition to the networking requirement. The user feedback information can represent a preference degree of a historical user for each model of the device at each layer. The popularity information can represent a registration status and/or a usage status of each model of the device at each layer. This helps avoid recommending a model of device that is out of stock, unpopular, or out of production to the user. Therefore, the model that is of the device at each layer and that is determined based on the networking requirement, the user feedback information, and the popularity information may be a popular device. This better meets a user requirement.

In a possible implementation, the electronic device determines, based on the quantity of devices at the first layer, the first device capability subrequirement, the user feedback information, and the popularity information, the one or more models of the device at the first layer and the quantity of devices corresponding to each of the one or more models of the device at the first layer, and determines, based on the model of the device at the first layer, the quantity of devices corresponding to the model of the device at the first layer, the second device capability subrequirement, the matching requirement, the user feedback information, and the popularity information, one or more models of the device at the another layer and a quantity of devices corresponding to the one or more models of the device at the another layer.

In this implementation, when recommending the device at each layer, in addition to a matching requirement between upstream and downstream devices, the electronic device further considers user feedback information and popularity information of the device at the layer, so that a device model that is popular and that better meets the user requirement may be recommended.

In a possible implementation, for each of a plurality of historical networking solutions, the electronic device obtains a user feedback score of a historical user for a device of each model in each historical networking solution. For a device of any model in the plurality of historical networking solutions, the electronic device obtains user feedback information of the device of the any model based on user feedback scores of the device of the any model in different historical networking solutions. All devices of models in the plurality of historical networking solutions include the devices of models in the set of available devices.

In this implementation, a user feedback score of each historical networking solution is used as the user feedback score of the networking device of each model in each historical networking solution. The user feedback information of the device of the any model is obtained through calculation based on the user feedback scores of the device of the any model in the different historical networking solutions. In this way, user feedback information of the device of each model in the set of available devices may be obtained, so that a recommended model of the device at each layer and a quantity corresponding to each model are subsequently determined based on the user feedback information of the device of each model in the set of available devices.

In a possible implementation, for any device in the set of available devices, the electronic device filters, based on a device registration time point, a plurality of models registered by the any device within a preset time period. The electronic device determines an addition frequency of each of the plurality of models based on a registration quantity of each of the plurality of models within the preset time period. The electronic device determines a usage frequency of each of the plurality of models based on a quantity of online times of each of the plurality of models within the preset time period. The electronic device obtains the popularity information of each of the plurality of models based on the addition frequency and the usage frequency.

In this implementation, the electronic device may sort all models based on a registration quantity of each model registered by the any device within the preset time period, to obtain ranking of registration quantities of all the models. A score of each model is determined based on the ranking of the registration quantities, and the score is used as the addition frequency of each model. Alternatively, all models may be sorted based on a quantity of online times of each model registered by the any device within the preset time period, to obtain ranking of quantities of online times of all the models.

Another score of each model is obtained based on the ranking of the quantities of online times, and the score is used as the usage frequency of each model. The popularity information of each model is determined based on the usage frequency and the addition frequency, so that the recommended model of the device at each layer and the quantity corresponding to each model are subsequently determined based on the popularity information of each model of the any device.

In a possible implementation, the networking requirement further includes a verification requirement. The electronic device further evaluates the networking solution based on the verification requirement, and displays an evaluation result.

In this implementation, the electronic device may evaluate (or verify), based on the verification requirement, a generated networking solution, and output the evaluation result. The user may determine, based on the evaluation result, whether to adopt the networking solution or determine a requirement to be adjusted.

In a possible implementation, the verification requirement includes a verification subrequirement for model requirement matching and a verification subrequirement for connection relationship matching. The evaluation result includes a networking score of the networking solution. The electronic device evaluates model requirement matching of each device in the networking solution based on the verification subrequirement for model requirement matching, to obtain a model requirement matching score of the networking solution, evaluates a connection relationship matching between devices in the networking solution based on the verification subrequirement for connection relationship matching, to obtain a connection relationship matching score of the networking solution, and obtains the networking score based on the model requirement matching score of the networking solution and the connection relationship matching score of the networking solution.

In this implementation, evaluation and verification are performed on the networking solution from the model requirement matching, the connection relationship matching, and other aspects. The networking score is obtained through calculation based on the model requirement matching score and the connection relationship matching score. The networking score can reflect a matching degree between the networking solution and a user requirement and the overall performance. Therefore, the networking score is displayed to the user, so that the user may determine, based on the networking score, whether to adopt the networking solution.

In a possible implementation, the evaluation result further includes a model requirement matching score of a device of each model in the networking solution and a connection relationship matching score corresponding to a connection line between every two devices in the networking solution.

In this implementation, a level may be set for the verification subrequirement for model requirement matching of the device of each model and the verification subrequirement for connection relationship matching of the every two devices. The level may represent importance of the verification subrequirement for model requirement matching of the device of each model and the verification subrequirement for connection relationship matching of the every two devices. The electronic device may display, based on the level, a model requirement matching score corresponding to each verification subrequirement for model requirement matching and a connection relationship matching score corresponding to each verification subrequirement for connection relationship matching, so that the user intuitively learns that the networking solution meets a poor verification subrequirement, and this triggers the user to adjust the networking requirement of the user.

In a possible implementation, the model requirement matching score of the device of each model and/or the connection relationship matching score corresponding to the connection line between the every two devices include/includes a scoring item whose score is less than a preset score. The electronic device receives a new networking requirement, and regenerates a networking solution based on the new networking requirement.

In this implementation, the new networking requirement means information about a networking requirement re-input by the user based on the scoring item whose score is less than the preset score. The scoring item whose score is less than the preset score indicates that the networking solution meets a poor verification subrequirement, but an original intention of the user may be that the networking solution is needed to meet the verification subrequirement well. Therefore, displaying the scoring item whose score is less than the preset score may trigger the user to adjust requirement information previously input by the user, so that the electronic device generates a new networking solution based on the re-input networking requirement of the user.

In a possible implementation, the electronic device determines a plurality of target historical networking solutions from the plurality of historical networking solutions. Application scenes of the plurality of target historical networking solutions are the same as an application scene of the networking solution. User feedback scores of a device of each model in the plurality of target historical networking solutions are determined based on user feedback scores of a historical user on the plurality of target historical networking solutions. Statistics of the user feedback scores of the device of each model in the plurality of target historical networking solutions are obtained. The device of each model in the plurality of target historical networking solutions includes the device of each model in the networking solution. A user satisfaction score of the device of each model in the networking solution is determined based on the statistics. A user satisfaction score of the networking solution is obtained and displayed based on the user satisfaction score of the device of each model in the networking solution.

In this implementation, if the user satisfaction score of the networking solution is displayed to the user, the user satisfaction score of the networking solution may be used as another reference indicator in addition to the networking score. This helps the user determine whether to adopt the networking solution.

In a possible implementation, the electronic device obtains a candidate networking score of the networking solution based on the model requirement matching score of the networking solution and the connection relationship matching score of the networking solution, and obtains statistics of a plurality of networking scores of the plurality of target historical networking solutions. The electronic device determines the networking score based on the candidate networking score and the statistics according to a preset scoring rule.

In this implementation, the candidate networking score is compared with the statistics, to reflect a performance level of the networking solution in the plurality of target historical networking solutions in a same application scene. The electronic device may determine the networking score of the networking solution based on the performance level according to the preset scoring rule. Therefore, the networking score can intuitively reflect the performance level of the networking solution in historical networking solutions in a same industry/application scene.

In a possible implementation, the electronic device generates a unique identifier of the networking solution and an adoption selection of the user on the networking solution, obtains the user feedback score of the user on the networking solution, and associates and stores the unique identifier, the adoption selection of the user on the networking solution, and the user feedback score.

In this implementation, the adoption selection represents whether the user adopts the networking solution. The unique identifier, the user feedback score of the user on the networking solution, and the adoption identifier are associated and stored, to facilitate model recommendation and networking generation that are performed by subsequently using the user feedback score and the adoption identifier of the networking solution.

A second aspect of this application provides a networking apparatus. The apparatus has a function of implementing a behavior in the method embodiment in the first aspect. The function may be implemented by hardware, or may be implemented by hardware by executing corresponding software. The hardware or the software includes one or more modules corresponding to the foregoing function.

In a possible implementation, the apparatus includes an obtaining unit and a processing unit. The obtaining unit is configured to obtain a networking requirement, where the networking requirement includes a scene requirement, a coverage requirement, a device capability requirement, and a matching requirement between upstream and downstream devices. The processing unit is configured to obtain a networking structure based on the scene requirement. The processing unit is further configured to determine, based on the coverage requirement, the device capability requirement, and the matching requirement, a model of a device at each layer in the networking structure and a quantity corresponding to the model. The processing unit is further configured to connect devices at two adjacent layers in the networking structure, to generate a networking solution.

In a possible implementation, the device capability requirement includes a first device capability subrequirement and a second device capability subrequirement. The first device capability subrequirement indicates a capability requirement of a device at the first layer in the networking structure. The second device capability subrequirement indicates a capability requirement of a device at another layer other than the device at the first layer in the networking structure. The processing unit is specifically configured to determine, based on the coverage requirement and the first device capability subrequirement, a model of the device at the first layer and a quantity of devices corresponding to the model of the device at the first layer; and determine, based on the model of the device at the first layer, the quantity of devices corresponding to the model of the device at the first layer, the second device capability subrequirement, and the matching requirement, a model of the device at the another layer and a quantity of devices corresponding to the model of the device at the another layer.

In a possible implementation, the processing unit is specifically configured to determine a quantity of the devices at the first layer based on the coverage requirement; and determine, based on the quantity of the devices at the first layer and the first device capability subrequirement of the device at the first layer, one or more models of the device at the first layer and a quantity of devices corresponding to each of the one or more models of the device at the first layer.

In a possible implementation, the processing unit is specifically configured to obtain user feedback information and popularity information of a device of each model in a set of available devices; and determine, based on the coverage requirement, the device capability requirement, the matching requirement, the user feedback information, and the popularity information, a model of a device at each layer in the networking structure and a quantity corresponding to the model.

In a possible implementation, the processing unit is specifically configured to: determine, based on the quantity of devices at the first layer, the first device capability subrequirement, the user feedback information, and the popularity information, the one or more models of the device at the first layer and the quantity of devices corresponding to each of the one or more models of the device at the first layer; and determine, based on the model of the device at the first layer, the quantity of devices corresponding to the model of the device at the first layer, the second device capability subrequirement, the matching requirement, the user feedback information, and the popularity information, one or more models of the device at the another layer and a quantity of devices corresponding to the one or more models of the device at the another layer.

In a possible implementation, the processing unit is specifically configured to: for each of a plurality of historical networking solutions, obtain a user feedback score of a historical user for a device of each model in each historical networking solution; and for a device of any model in the plurality of historical networking solutions, obtain user feedback information of the device of the any model based on a user feedback score of the device of the any model in different historical networking solutions. All devices of models in the plurality of historical networking solutions include the devices of models in the set of available devices.

In a possible implementation, the processing unit is specifically configured to: for any device in the set of available devices, filter, based on a device registration time point, a plurality of models registered by the any device within a preset time period; determine an addition frequency of each of the plurality of models based on a registration quantity of each of the plurality of models within the preset time period; determine a usage frequency of each of the plurality of models based on a quantity of online times of each of the plurality of models within the preset time period; and obtain the popularity degree of each of the plurality of models based on the addition frequency and the usage frequency.

In a possible implementation, the networking requirement further includes a verification requirement. The processing unit is further configured to evaluate the networking solution based on the verification requirement, and display an evaluation result.

In a possible implementation, the verification requirement includes a verification subrequirement for model requirement matching and a verification subrequirement for connection relationship matching. The evaluation result includes a networking score of the networking solution. The processing unit is specifically configured to: evaluate model requirement matching of each device in the networking solution based on the verification subrequirement for model requirement matching, to obtain a model requirement matching score of the networking solution; evaluate a connection relationship matching between devices in the networking solution based on the verification subrequirement for connection relationship matching, to obtain a connection relationship matching score of the networking solution; and obtain the networking score based on the model requirement matching score of the networking solution and the connection relationship matching score of the networking solution.

In a possible implementation, the evaluation result further includes the model requirement matching score of a device of each model in the networking solution and the connection relationship matching score corresponding to a connection line between every two devices in the networking solution.

In a possible implementation, the model requirement matching score of the device of each model and/or the connection relationship matching score corresponding to the connection line between the every two devices include/includes a scoring item whose score is less than a preset score. The processing unit is further configured to receive a new networking requirement, and regenerate a networking solution based on the new networking requirement.

In a possible implementation, the processing unit is further configured to: determine a plurality of target historical networking solutions from a plurality of historical networking solutions. Application scenes of the plurality of target historical networking solutions are the same as application scenes of the networking solutions; determine user feedback scores of a device of each model in the plurality of target historical networking solutions based on user feedback scores of a historical user on the plurality of target historical networking solutions; obtain statistics of the user feedback score of the device of each model in the plurality of target historical networking solutions. The device of each model in the plurality of target historical networking solutions includes a device of each model in the networking solution; determine a user satisfaction score of the device of each model in the networking solution based on the statistics; and obtain and display the user satisfaction score of the networking solution based on a user satisfaction score of the device of each model in the networking solution.

In a possible implementation, the processing unit is specifically configured to: obtain a candidate networking score of the networking solution based on the model requirement matching score of the networking solution and the connection relationship matching score of the networking solution; obtain statistics of a plurality of networking scores of the plurality of target historical networking solutions; and determine a networking score according to a preset scoring rule based on the candidate networking score and the statistics.

In a possible implementation, the processing unit is further configured to: generate a unique identifier of the networking solution and an adoption selection of a user of the networking solution; obtain a user feedback score of the user on the networking solution; and Associate the unique identifier, the adoption selection of the user of the networking solution with the user feedback score for storage.

It should be noted that, for beneficial effects of the second aspect, refer to descriptions of the first aspect. Details are not described herein again.

A third aspect of this application provides an electronic device, including a processor and a memory. The memory is configured to store a computer program. The processor is configured to execute a computer program stored in the memory, to enable the electronic device to perform the method according to any possible implementation of the first aspect.

A fourth aspect of this application provides a computer-readable storage medium, including a program or instructions. When the program or the instructions are run on a processor, the method according to any possible implementation of the first aspect is performed.

A fifth aspect of this application provides a computer program product, including a computer program. When the computer program is run by an electronic device, the electronic device is enabled to perform the method in any possible implementation of the first aspect.

## BRIEF DESCRIPTION OF DRAWINGS

To describe the technical solutions in embodiments of the present invention or in the background more clearly, the following describes the accompanying drawings needed for embodiments of the present invention or the background.

FIG. 1 is a schematic diagram of a system architecture according to an embodiment of this application;
FIG. 2 is a schematic flowchart of a networking method according to an embodiment of this application;
FIG. 3 is a schematic diagram of a coded networking requirement according to an embodiment of this application;
FIG. 4 is a schematic diagram of a networking topology according to an embodiment of this application;
FIG. 5 is a schematic diagram of another networking topology according to an embodiment of this application;
FIG. 6 is a schematic flowchart of another networking method according to an embodiment of this application;
FIG. 7A is a schematic diagram of a networking requirement input interface according to an embodiment of this application;
FIG. 7B is a schematic diagram of a coded supermarket networking requirement according to an embodiment of this application;
FIG. 7C is a schematic diagram of a part of input conditions in supermarket networking according to an embodiment of this application;
FIG. 8 is a schematic diagram of a supermarket networking topology according to an embodiment of this application;
FIG. 9 is a schematic diagram of a structure of a networking apparatus according to an embodiment of this application; and
FIG. 10 is a schematic diagram of a structure of an electronic device according to an embodiment of this application.

## DESCRIPTION OF EMBODIMENTS

For ease of understanding this application by a person skilled in the art, the following describes the technical solutions provided in this application with reference to the accompanying drawings.

This application provides a networking method, a networking apparatus, an electronic device, and a storage medium. The networking method may be performed by the electronic device. For example, the electronic device may be a computer, a virtual machine, a server, a cloud device, or a mobile terminal. The electronic device obtains a networking requirement, and obtains a corresponding networking structure based on a scene requirement in the networking requirement. The scene requirement may be an application scene of a networking solution. The electronic device may determine a typical (or common) networking structure in the application scene based on the application scene. The electronic device determines, based on a coverage requirement, a device capability requirement, and a matching requirement between upstream and downstream devices in the networking requirement, a recommended model of a device at each layer in the networking structure and a quantity corresponding to each model, connects recommended devices at two adjacent layers to generate the networking solution, and recommends the networking solution to a user. The scene requirement, the coverage requirement, and the device capability requirement are usually input by the user. The matching requirement between the upstream and downstream devices may be input by the user, or may be preset. In this solution, the electronic device automatically generates the networking solution based on the networking requirement. This reduces a labor input in network deployment and improves efficiency of the network deployment. In addition, the networking requirement further includes the matching requirement between the upstream and downstream devices. This helps avoid a problem such as capability mismatching between the upstream and downstream devices in a recommended networking solution. Upstream and downstream devices with a higher matching degree are connected to generate the networking solution, so that overall performance of the networking solution can be improved.

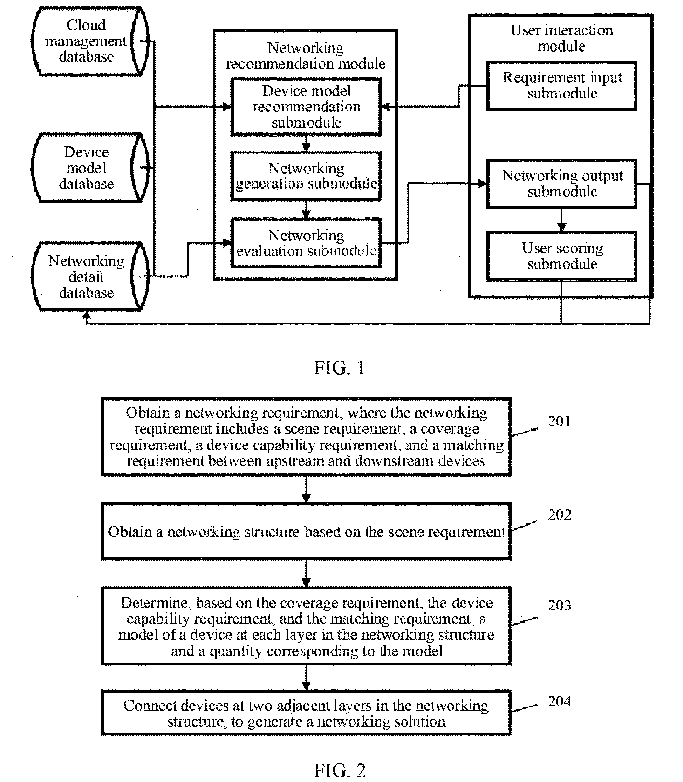

FIG. 1 is a schematic diagram of a system architecture according to an embodiment of this application. As shown in FIG. 1, the system architecture may include at least a user interaction module, a networking recommendation module, and a database. The user interaction module includes a requirement input submodule, a networking output submodule, and a user scoring submodule. The networking recommendation module includes a device model recommendation submodule, a networking generation submodule, and a networking evaluation submodule. The database includes a cloud management database, a device model database, and a networking detail database. In a possible implementation, the database may be deployed on cloud, and the user interaction module and the networking recommendation module may be deployed on a client such as an application, an applet, software (for example, software that provides a networking recommendation service), or a browser. In another possible implementation, the database, the user interaction module, and the networking recommendation module may all be deployed on cloud. A user may use the networking recommendation service via the application program, the applet, the software, and the browser.

The requirement input submodule is configured to obtain a networking requirement. For example, the requirement input submodule provides a man-machine interaction interface, and the user may input the networking requirement on the man-machine interaction interface. The networking requirement may include a scene requirement, a coverage requirement, a device capability requirement, and the like. For example, the scene requirement may be a network application scene/industry, for example, a supermarket scene, a branch office scene, or a college and university scene. The coverage requirement may represent a requirement of a user on a quantity of network devices. For example, in the supermarket scene, the requirement of the user on the quantity of network devices depends on a total area, passenger flows, a quantity of terminals, and the like of a supermarket. In the branch office scene, a requirement of a user on the quantity of network devices depends on a quantity of employees, a total area of offices, offices, conference rooms, servers, and the like of an enterprise. For example, if the user requires five access points (access points, APs) in each office and conference room, a quantity of offices and a quantity of conference rooms determine a total quantity of APs required. For example, a quantity and types of servers determine a model of a switch and a quantity corresponding to each model. In the college and university scene, a requirement of a user on the quantity of network devices depends on a quantity of teachers and students, campus areas, common classrooms, terrace classrooms, laboratories, and the like. For example, if the user requires 50 APs in each common classroom, terrace classroom, and laboratory, a quantity of common classrooms, a quantity of terrace classrooms, and a quantity of laboratories determine a total quantity of APs required. The device capability requirement may include quality (Quality) of a device and a function requirement of the device, for example, whether the device has a video surveillance function, whether the device needs an agile distributed wireless network communication technology (Wireless Fidelity, WiFi), whether the device has an internet of things (Internet of Things, IoT) function, and whether the device has a power over Ethernet (Power over Ethernet, PoE) capability. For example, a requirement input by the user may further include a matching requirement between upstream and downstream devices. For example, in a typical networking structure, if a switch is an upstream device of an AP, the matching requirement may include that a PoE power supply capability of the switch is greater than or equal to a PoE power supply requirement of the AP, a downlink port type of the switch and an uplink port type of the AP are both electrical ports, a downlink port speed of the switch matches an uplink port speed of the AP, a forwarding capability of the switch is greater than or equal to a forwarding capability of the AP, and the like. It should be noted that the matching requirement between the upstream and downstream devices may alternatively be preset, in other words, does not need to be input by the user.

The device model recommendation submodule recommends a device model and a quantity of devices corresponding to each model based on the scene requirement, the coverage requirement, the device capability requirement, and the matching requirement between the upstream and downstream devices. Further, the device model recommendation submodule may further obtain popularity information of a device of each model based on device usage data and device registration data that are stored in the cloud management database. The device model recommendation submodule may further obtain user feedback information of a device of each model based on user feedback scores of a plurality of historical networking solutions stored in the networking details database. The device model recommendation submodule may recommend, based on the scene requirement, the coverage requirement, the device capability requirement, the matching requirement between the upstream and downstream devices, the popularity information of the device of each model, the user feedback information, and a detailed parameter of the device of each model stored in the device model database, a device model that best meets a user requirement and a quantity of devices corresponding to each model.

The networking generation submodule is configured to connect devices, of models, that belong to an upstream and downstream relationship and whose models are recommended by the device model recommendation submodule, to generate a networking solution.

The networking evaluation submodule is configured to perform evaluation and verification on the generated networking solution based on a verification requirement, to obtain a networking score of the networking solution. For example, the verification requirement may be input by the user, or may be preset. This is not limited herein. For example, the networking evaluation submodule may further perform comprehensive evaluation on the networking solution from a plurality of aspects such as model requirement matching and connection relationship matching. Further, the networking evaluation submodule may further obtain, based on the user feedback scores of the plurality of historical networking solutions, a user satisfaction score of the networking solution generated this time.

The networking output submodule is configured to output the networking solution. For example, the networking output submodule displays the networking solution generated this time through the man-machine interaction interface. The networking output submodule is further configured to output the networking score of the networking solution. For example, the networking score of the networking solution is displayed on the man-machine interaction interface. The user may determine whether to adopt the networking solution based on the networking score. Further, the networking output submodule may further display the user satisfaction score of the networking solution to the user through the man-machine interaction interface. Further, the networking output submodule may further display each verification requirement and a score of each verification requirement to the user, and the user may intuitively learn, based on the score of each verification requirement, that the networking solution generated this time meets a poor requirement item. On this basis, if the requirement item has high importance, the user may adjust the requirement previously input, so that the device model recommendation submodule and the networking generation submodule regenerate a networking solution based on a new user requirement, to better match the requirement item of the high importance.

The user scoring submodule is configured to record whether the user adopts the networking solution output by the networking output submodule, and a score (namely, a user feedback score) of the user on the networking solution. Whether the networking solution is adopted and the user score of the networking solution are stored in the networking detail database.

The cloud management database is configured to store a basic parameter of a device, device online data, device usage data, device registration data, and the like. Table 1 shows an example of a data table in the cloud management database.

**Table 1**

| User ID | Project | Device role | Model | Device ID | Registration time point | Last online time point |
|---------|---------|-------------|-------|-----------|------------------------|------------------------|
| Wq2ycXE | market | FW | USG6530E | XX:XX:XX: XX:XX:XX | 2021-10-31 09:00:00 | 2021-11-31 09:00:00 |
| 5cN6WN | market | AGG | S5735S-L32ST4X-A | XX:XX:XX: XX:XX:XX | 2021-10-31 09:00:00 | 2021-11-31 09:00:00 |
| MVzG3jo | market | ACC | S5735S-L24P4S-MA | XX:XX:XX: XX:XX:XX | 2021-10-31 09:00:00 | 2021-11-31 09:00:00 |
| 0Ury3 | market | AP | AirEngine 5760-22W | XX:XX:XX: XX:XX:XX | 2021-10-31 09:00:00 | 2021-11-31 09:00:00 |

The basic parameter of the device in Table 1 includes the user identifier (identifier, ID), the project to which the device belongs, the device role (or type), the model, the device ID (for example, a physical address of the device), and the like. The device online data may be the last online time point of the device. The device registration data may be the registration time point of the device. The device role may be a firewall (Firewall, FW), an aggregation switch (Aggregation Switch, AGG), an access switch (Access Switch, ACC), or an AP.

The device model database stores attribute information of the device of each model. Table 2 shows an example of an AP model data table in the device model database.

**Table 2**

| Model | PoE power supply speed | Whether agile distributed WiFi is supported | Whether an IoT is supported | Whether an AP is a plate AP | Whether an industry/a scene is a retail industry/scene | Whether an industry/a scene is an education industry/scene |
|-------|-----------------------|---------------------------------------------|------------------------------|------------------------------|--------------------------------------------------------|-------------------------------------------------------------|
| AirEngine 5760-22W | 2.5G | N | N | Y | N | N |
| AirEngine 5760-51 | 5G | N | Y | N | Y | Y |
| Model | Whether an industry/a scene is an office industry/scene | Required minimum PoE power supply level | Whether it is sold in China | Quality | | |
| AirEngine 5760-22W | N | PoE+ | Y | High | | |

(continued)

| Model | PoE power supply speed | Whether agile distributed WiFi is supported | Whether an IoT is supported | Whether an AP is a plate AP | Whether an industry/a scene is a retail industry/scene | Whether an industry/a scene is an education industry/scene |
|---|---|---|---|---|---|---|
| AirEngine 5760-51 | Y | PoE+ | Y | Low | | |

Attribute information of each model of the AP in Table 2 includes the device model, the PoE power supply speed (which may be obtained based on a quantity of ports that support a PoE power supply, is usually based on a quantity of uplink ports of the AP, and is in a unit of gigabyte (gigabyte, G)), whether the agile distributed WiFi is supported (where for example, N represents no, and Y represents yes), whether the IoT is supported, whether video surveillance is supported, whether the AP is the plate AP, whether the application industry/scene is the retail (retail) industry/scene, whether the application industry/scene is the education industry/scene, whether the application industry/scene is the office industry/scene, the required minimum PoE power supply level, an end of marketing date, an end of service support date, whether it is sold in China, a supported latest software version, the quality (which is, for example, high (High), middle (Middle), or low (Low)), a port quantity, a port speed, a port type, and the like. The device model database stores various models of devices and updates the device models in a timely manner, to providing more choices for the user. Based on a user requirement, an electronic device may recommend a device with a high popularity degree and better performance to the user.

The networking detail database stores a networking requirement of each networking solution. Table 3 shows an example of a networking requirement table of the networking solution in the networking detail database.

**Table 3**

| Networking ID | Application scene | Quality | Quantity of wired terminals | Quantity of APs | Whether office WiFi is needed | Whether visitor WiFi is needed |
|---|---|---|---|---|---|---|
| adkHk | retail | High | 100 | 100 | Y | Y |
| 6i6XUrk | retail | High | 100 | 100 | Y | Y |

In Table 3, the networking ID is used as a primary key. The networking requirement of each networking solution includes but is not limited to the application scene, the quality, the quantity of wired terminals, the quantity of APs, whether the office WiFi is needed, and whether the visitor WiFi is needed.

The networking detail database further stores a device model of each networking solution and a quantity of devices corresponding to each model. Table 4 shows an example of a table of a device model of one networking solution and a quantity of devices corresponding to each model.

**Table 4**

| Networking ID | FW model | Quantity of FWs | ACC model | Quantity of ACCs | AGG model | Quantity of AGGs | AP model | Quantity of APs |
|---|---|---|---|---|---|---|---|---|
| adkHk | USG65 75E-B | 1 | S5735S-L24P4S-MA | 10 | S5735S-L32ST4X-A | 1 | AirEngine 5760-22W | 100 |
| 6i6XUrk | USG65 75E-B | 1 | S5735S-L24P4S-MA | 10 | S5735S-L32ST4X-A | 1 | AirEngine 5760-51 | 100 |

In Table 4, the networking ID is also used as a primary key, and examples of a model of each device and a quantity corresponding to each model in a networking solution including the FW, the ACC, the AGG, and the AP are shown.

The networking detail database further stores information such as an adoption identifier of the user on the networking solution, the user feedback score, and the networking score of the networking solution. Table 5 shows an example of the networking solution adoption identifier, the user feedback score, and the networking score in the networking detail database.

**Table 5**

| Networking ID | Adoption identifier | Networking score | User feedback score |
|---|---|---|---|
| adkHk | N | 3 | 3 |
| 6i6XUrk | Y | 4.5 | 4.5 |

In Table 5, the networking ID is also used as a primary key, and the adoption identifier represents whether the user adopts the networking solution (where for example, N represents that the networking solution is not adopted, and Y represents that the networking solution is adopted). Table 3 to Table 5 can be associated based on the networking ID to obtain information such as the networking requirement, the device model, the quantity of devices, a networking score, and a user feedback score of each networking.

Based on the system architecture shown in FIG. 1, this application may implement the networking method described in the following embodiments, to reduce a degree of manual intervention in work of device selection, networking topology generation, and the like during network deployment, so that efficiency of the device selection and the networking topology generation is improved, to improve efficiency of the network deployment.

The following describes in detail the technical solutions provided in this application with reference to specific implementations.

FIG. 2 is a schematic flowchart of a networking method according to an embodiment of this application. The networking method may be executed by an electronic device, to generate a networking solution (or a networking topology). The networking method includes but is not limited to the following steps or operations.

201: Obtain a networking requirement, where the networking requirement includes a scene requirement, a coverage requirement, a device capability requirement, and a matching requirement between upstream and downstream devices.

The scene requirement, the coverage requirement, and the device capability requirement are usually input by a user, and the matching requirement between the upstream and downstream devices may be input by the user, or may be preset.

202: Obtain a networking structure based on the scene requirement.

An application scene indicated by the scene requirement determines a requirement of the user on a service that can be provided by a network. For example, in a supermarket scene, a service that the user may need includes a wired office, office WiFi, visitor WiFi, an electronic price tag, a cashier, an electronic scale, a handheld PDA (Personal Digital Assistant, personal digital assistant), a camera, and the like. For example, in a branch office scene, a service that the user may need includes a wired office, office WiFi, visitor WiFi, reception, an IoT, and a camera. For example, in a college and university scene, a service that the user may need includes a wired office, office WiFi, wired teaching, teaching WiFi, a wired dormitory, dormitory WiFi, an IoT, and a camera. By analyzing a service that can be provided by a network in each application scene, a typical service that can be provided by the network in each application scene may be obtained, and a corresponding networking structure is set for the typical service. When the electronic device determines an application scene of user networking based on a scene requirement, the networking structure corresponding to the typical service involved in the application scene may be used as a networking structure of a networking solution that needs to be generated.

203: Determine, based on the coverage requirement, the device capability requirement, and the matching requirement, a model of a device at each layer in the networking structure and a quantity corresponding to the model.

The coverage requirement may be a quantity, of network devices, input by the user, for example, a quantity of APs and a quantity of wired terminals. The coverage requirement may alternatively be information, such as an area, a quantity of rooms, and a passenger flow, that is input by the user. For example, in a branch office scene, the coverage requirement may include information such as a quantity of employees, a quantity of offices, and a quantity of APs needed by each office. The electronic device may determine, based on the quantity of offices and the quantity of APs needed by each office, a quantity of APs needed by the user. For example, if there are 50 offices and each office needs two APs, the quantity of APs needed by the user is 100. The electronic device may determine, based on the quantity of employees, a quantity of wired terminals needed by the user. For example, if there are 100 employees, the quantity of wired terminals needed by the user may be 100.

In a possible implementation, the device capability requirement includes a first device capability subrequirement and a second device capability subrequirement. The first device capability subrequirement indicates a capability requirement of a device at the first layer in the networking structure. The second device capability subrequirement indicates a capability requirement of a device at another layer other than the device at the first layer in the networking structure. The electronic device determines a quantity of devices at the first layer in the networking structure based on the coverage requirement. The electronic device determines, based on the quantity of devices at the first layer and the first device capability subrequirement of the device at the first layer, one or more models of the device at the first layer and a quantity of devices corresponding to each of the one or more models of the device at the first layer.

In a possible implementation, the electronic device determines, based on the model of the device at the first layer, the quantity of devices corresponding to the model of the device at the first layer, the second device capability subrequirement, and the matching requirement, a model of the device at the another layer and a quantity of devices corresponding to the model of the device at the another layer in the networking structure.

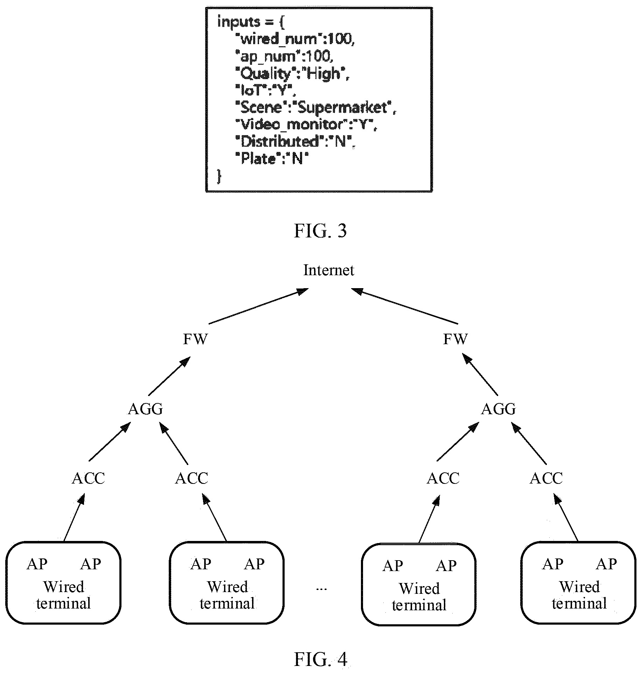

For example, the networking structure obtained by the electronic device based on the scene requirement includes four types of devices: an FW, an AGG, an ACC, and an AP. In this case, the device at the first layer is the AP, a device at a second layer is the ACC, a device at a third layer is the AGG, and a device at a fourth layer is the FW. The electronic device determines a specific requirement of the user for the network based on a coded networking requirement. FIG. 3 is a schematic diagram of a coded networking requirement according to an embodiment of this application. In FIG. 3, "wired_num" represents a quantity of wired terminals required by a user, which is 100 in the example; "ap_num" represents a quantity of APs required by the user, which is 100 in the example; "Quality" represents quality of a device required by the user, which is "High" in the example; "IoT" represents whether the user needs an internet of things function, which is yes (Y) in the example; "Scene" represents an application scene, which is a supermarket (Supermarket) in the example; "Video_monitor" represents whether the user needs a video surveillance function, which is yes (Y) in the example; "Distributed" represents whether agile distributed WiFi is needed, which is no (N) in the example; "Plate" represents whether a plate AP is needed, which is no (N) in the example.

The electronic device constructs, based on the coded networking requirement, an input condition of networking. In a first dimension, a hard condition of the networking and a soft condition of the networking are constructed. The hard condition refers to a condition that the networking needs to meet. If the hard condition is not met, a networking topology cannot normally provide a network service needed by the user. The soft condition refers to a condition that is met as much as possible on the basis of meeting the hard condition. The soft condition may enable a network of the networking topology to run better and have better performance. For example, the hard condition may include: A quantity of ports of an ACC is greater than or equal to a sum of a quantity of wired terminals and a quantity of APs; an IoT function of the AP matches an IoT function required by the user; a PoE power supply capability of the ACC is greater than or equal to a PoE power supply requirement of the AP; a central AP of agile distributed WiFi matches a remote unit; and the like. The soft condition may be: "Quality" of each device matches "Quality" required by the user; "Scene" of each device matches "Scene" required by the user; "Video_monitor" of an ACC matches "Video_monitor" required by the user; "Distributed" of an AP matches "Distributed" required by the user; "Plate" of an AP matches "Plate" required by the user; an uplink port type of an AP is an electrical port; an uplink port type of an ACC is an optical port; a downlink port type of an ACC is an electrical port; an uplink port type of an AGG is an optical port; a downlink port type of an AGG is an optical port; an uplink port type of an FW is an optical port; a downlink port type of an FW is an optical port; an uplink port speed of an AP is greater than or equal to 1 Gigabit per second (Gigabit per second, Gbps); an uplink port speed of an ACC is greater than or equal to 10 Gbps; a downlink port speed of an ACC is greater than or equal to 1 Gbps; an uplink port speed of an AGG is greater than or equal to 10 Gbps; a downlink port speed of an AGG is greater than or equal to 1 Gbps; a downlink port speed of an FW is greater than or equal to 1 Gbps; and the like. In a second dimension, the hard condition is further classified into a hard equality condition and a hard inequality condition. For example, the hard equality condition may be that an "IoT" of the AP is equal to an "IoT" required by the user. The hard inequality condition may be that the PoE power supply capability of the ACC is greater than or equal to the PoE power supply requirement of the AP. The soft condition is classified into a soft equality condition and a soft inequality condition. For example, the soft equality condition may be that "Quality" of the AP is equal to "Quality" required by the user. The soft inequality condition may be that the uplink port speed of the AP is greater than or equal to 1 Gbps.

The electronic device establishes a model recommendation model for a device at each layer by using an input condition related to the device at each layer. Variables that respectively define recommended quantities corresponding to the AP, ACC, AGG, and FW models are $X^{AP}$, $X^{ACC}$, $X^{AGG}$, and $X^{FW}$. The four variables are all vectors, and are each formed by quantities corresponding to models of a device of such a type. For example, $X^{AP} = [x_1^{AP}, x_2^{AP}, ..., x_n^{AP}]$, where $n$ is a quantity of models of the AP, and $x_n^{AP}$ represents a quantity of devices corresponding to the $n$th model of the AP. In addition, there are variables that respectively define attribute information of models of the AP, the ACC, the AGG, and the FW. For example, quality of models of the AP may be defined as $X^{AP,Quality}$, where $X^{AP,Quality} = [x_1^{AP,Quality}, x_2^{AP,Quality}, ..., x_n^{AP,Quality}]$. It should be understood that $x_n^{AP,Quality}$ represents quality of the $n$th model of the AP.

Step 1: Select a quantity of devices (namely, APs) at the first layer that are used and the first device capability subrequirement from the input condition, and determine, based on the model recommendation model, one or more recommended models of the device at the first layer and a quantity corresponding to each recommended model. For example, the model recommendation model is shown in the following. An s.t. part represents a condition (which may be referred to as the hard condition) that each recommended model needs to meet, for example, a device quantity requirement (for example, ap_num shown in the following) and a capability requirement of a device (for example, an IoT capability shown in the following). A Min part represents a condition (which may be referred to as the soft condition) that is met as much as possible when the hard condition is met, for example, a device quality requirement, a matching requirement of an application scene of a device.

$$\text{Min } w_{11} \times \left( \left( X^{AP,Quality} \neq \text{"High"} \right) \cdot X^{AP} \right)^2 + w_{12}$$

$$\times \left( \left( X^{AP,Scene} \neq \text{"Education"} \right) \cdot X^{AP} \right)^2 + \cdots + w_{21}$$

$$\times \left( max(1 - X^{AP,upspeed}, 0) \cdot X^{AP} \right)^2$$

$$\text{s.t. } \left\| \left( X^{AP,IoT} = \text{"Y"} \right) \cdot X^{AP} \right\|_1 - \text{ap\_num} = 0$$

$$\left\| X^{AP} \right\|_1 - \text{"}ap\_num\text{"} = 0$$

Min represents minimization. $w_{11}$, $w_{12}$, ... each represent a coefficient of a penalty item for a soft equality constraint. $w_{21}$, ... each represent a coefficient of a penalty item for a soft inequality constraint. $X^{AP,Scene}$ represents application scenes of APs of models. $X^{AP,upspeed}$ represents an uplink port speed of the AP of each model. $X^{AP,IoT}$ represents an "IoT" capability of the AP of each model. · represents a dot product between vectors. "$\|\ \|_1$" represents a 1-norm of a vector. $1 - X^{AP,upspeed}$ represents whether the uplink port speed of the AP of each model is greater than or equal to 1G. If yes, $w_{21} \times (max(_1 - X^{AP,upspeed}, 0) \cdot X^{AP})^2$ is not used as a penalty item. If no, $w_{21} \times (max(1 - X^{AP,upspeed}, 0) \cdot X^{AP})^2$ is used as a penalty item. $\|X^{AP}\|_1$ - "ap_num" = 0 represents that a total quantity of APs of models needs be equal to a quantity of APs "*ap_num*" required by the user. $\|(X^{AP,IoT} = \text{"Y"}) \cdot X^{AP}\|_1$ - "ap_num" = 0 represents: If the user requires that the device has the IoT function, a quantity of recommended APs with the IoT function needs be equal to a quantity "ap_num" of required APs. The foregoing 1G may be a default requirement on the uplink port speed of the AP of each model. It may be understood that 1G may alternatively be another value, for example, 0.5G, or another value input by the user.

One or more recommended models of the AP and a quantity of devices corresponding to each of the one or more recommended models are obtained by solving the model recommendation model of the AP, that is, $X^{AP}$ is solved. To be specific, the electronic device may determine, based on a user requirement on a quantity of devices at the first layer and a first device capability subrequirement of the device at the first layer, one or more recommended models of the device at the first layer and a quantity of devices corresponding to each recommended model. Then, the electronic device may determine, based on the one or more recommended models of the device at the first layer and the quantity of devices corresponding to each recommended model, a recommended model of the device at the another layer and a quantity of devices corresponding to the recommended model.

Step 2: Select a second device capability subrequirement of a device (namely, the ACC) at a second layer and a matching requirement between the ACC and the AP from the input condition, and determine, based on the recommended model of the AP and the quantity of devices corresponding to each recommended model that are obtained in Step 1, one or more recommended models of the ACC and a quantity corresponding to each model. Similarly, the determining process may be implemented based on a model recommendation model of the ACC. For example, the model recommendation model is shown as follows, and includes a hard condition that is represented by an s.t part and that the ACC needs to meet and a soft condition that is represented by a Min part and that the ACC may meet.

$$\text{Min } w_{11} \times \left( \left( X^{ACC,Quality} \neq \text{"High"} \right) \cdot X^{ACC} \right)^2 + w_{12}$$

$$\times \left( \left( X^{ACC,Video_{monitor}} \neq \text{"Y"} \right) \cdot X^{ACC} \right)^2 + \cdots + w_{21}$$

$$\times \left( max(10 - X^{ACC,upspeed}, 0) \cdot X^{ACC} \right)^2$$

$$\text{s. t.}\quad \left\|X^{ACC,down_{num}} \cdot X^{ACC}\right\|_1 - ''\text{ap\_num''} - ''wired\_num'' \geq 0$$

$$\left\|X^{ACC,PoE_{num}} \cdot X^{ACC}\right\|_1 - ''\text{ap\_num''} \geq 0$$

$$\left\|\left(X^{ACC,Distributed} = ''\text{Y''}\right) \cdot X^{ACC}\right\|_1 = 0$$

$X^{ACC,Quality}$ represents quality of ACCs of models, $X^{ACC,Videomonitor}$ represents whether the ACC of each model has a video surveillance function, $X^{Acc,upspeed}$ represents an uplink of the ACC of each model, $X^{ACC,down_{num}}$ represents a quantity of downlink ports of the ACC of each model, $X^{ACC,PoE_{num}}$ represents a quantity of PoE power supply ports supported by the ACC of each model, and $X^{ACC,Distributed}$ represents whether the ACC of each model supports agile distributed WiFi. 10 - $X^{ACC,upspeed}$ represents whether the uplink port speed of the ACC of each model is greater than or equal to 10G. If yes, $w_{21} \times (max(10 - X^{ACC,upspeed}, 0) \cdot X^{ACC})^2$ is not used as a penalty item. If no, $w_{21} \times (max(10 - X^{Acc,upspeed}, 0) \cdot X^{ACC})^2$ is used as a penalty item. $\|X^{ACC,down_{num}} \cdot X^{ACC}\|_1$ - "ap_num" - "wired_num" $\geq 0$ represents a total quantity of downlink ports of all recommended ACCs needs to be greater than or equal to a sum of a quantity of wired terminals and a quantity of APs. $\|X^{ACC,PoE_{num}} \cdot X^{ACC}\|_1$ - "ap_num" $\geq 0$ represents a total quantity of PoE power supply ports supported by all recommended ACCs needs to be greater than or equal to the quantity of APs. $\|(X^{ACC,Distributed} = "Y") \cdot X^{ACC}\|_1 = 0$ represents ACCs that support the agile distributed WiFi are not needed. When each model of the device (namely, the AP) at the first layer and the quantity of devices corresponding to each model are already known, the electronic device solves the model recommendation model of the ACC by using each model of the AP and the quantity of devices corresponding to each model, to obtain the one or more recommended models of the ACC and the quantity of devices corresponding to each of the one or more recommended models. That is, $X^{ACC}$ is solved. The foregoing 10G may be a default requirement on the uplink port speed of the ACC of each model. It may be understood that 10G may alternatively be another value, for example, 5G, or another value input by the user.

Step 3: Select a second device capability subrequirement of a device (namely, the AGG) at a third layer and a matching requirement between the AGG and the ACC from the input condition, and determine, based on each model of the ACC and the quantity of devices corresponding to each model, one or more recommended models of the AGG and a quantity corresponding to each model. Similarly, the determining process may be implemented based on a model recommendation model of the AGG. For example, the model recommendation model is shown as follows, and includes a hard condition that is represented by an s.t part and that the AGG needs to meet and a soft condition that is represented by a Min part and that the AGG may meet.

$$\text{Min}\ w_{11} \times \left(\left(X^{AGG,Quality} \neq ''\text{High''}\right) \cdot X^{AGG}\right)^2 + w_{12}$$

$$\times \left(\left(X^{AGG,down_{type}} \neq ''\text{Optical''}\right) \cdot X^{AGG}\right)^2 + \cdots + w_{21}$$

$$\times (max(10 - X^{AGG,up_{speed}}, 0) \cdot X^{AGG})^2$$

$$\text{s. t.}\quad \left\|X^{AGG,down_{num}} \cdot X^{AGG}\right\|_1 - \left\|X^{ACC}\right\|_1 \geq 0$$

$X^{AGG,Quality}$ represents quality of an AGG of each model. $X^{AGG,down_{type}}$ represents a downlink port type of the AGG of each model. $X^{AGG,up_{speed}}$ represents an uplink port speed of the AGG of each model. $X^{AGG,down_{num}}$ represents a quantity of downlink ports of the AGG of each model. "Optical" represents an optical port. 10 - $X^{AGG,up_{speed}}$ represents whether the uplink port speed of the AGG of each model is greater than or equal to 10G. If yes, $w_{21} \times (max(10 - X^{AGG,up_{speed}}, 0) \cdot X^{AGG})^2$ is not used as a penalty item. If no, $w_{21} \times (max(10 - X^{AGG,up_{speed}}, 0) \cdot X^{AGG})^2$ is used as a penalty item. $\|X^{AGG,down_{num}} \cdot X^{AGG}\|_1$ - $\|X^{ACC}\|_1 \geq 0$ represents that a total quantity of downlink ports of all recommended AGGs needs to be greater than or equal to a quantity of ACCs. When each model of the device (namely, the ACC) at the second layer and the quantity of devices corresponding to each model are already known, the electronic device solves the model recommendation model of the AGG by using each model of the ACC and the quantity of devices corresponding to each model, to obtain the one or more recommended models of the AGG and the quantity of devices corresponding to each of the one or more recommended models. That is, $X^{AGG}$ is solved. The foregoing 10G may be a default requirement on the uplink port speed of the AGG of each model. It may be understood that 10G may alternatively be another value, for example, 5G, or another value input by the user.

Step 4: Select a second device capability subrequirement of a device (namely, the FW) at a fourth layer and a matching requirement between the FW and the AGG from the input condition, and determine, based on each model of the AGG and the quantity of devices corresponding to each model, a recommended model of the FW and a quantity corresponding to each recommended model. Similarly, the determining process may be implemented based on a model recommendation model of the FW. For example, the model recommendation model is shown as follows, and includes a hard condition that is represented by an s.t part and that the FW needs to meet and a soft condition that is represented by a Min part and that the FW may meet.

$$\text{Min} \quad w_{11} \times \left( \left( X^{FW,Quality} \neq \text{"High"} \right) \cdot X^{FW} \right)^2 + w_{12}$$

$$\times \left( \left( X^{FW,down_{type}} \neq \text{"Optical"} \right) \cdot X^{FW} \right)^2 + \cdots + w_{21}$$

$$\times \left( max(10 - X^{FW,up_{speed}}, 0) \cdot X^{FW} \right)^2$$

$$\text{s.t.} \quad \left\| X^{FW,down_{num}} \cdot X^{FW} \right\|_1 - \left\| X^{AGG} \right\|_1 \geq 0$$

$X^{FW,Quality}$ represents quality of an FW of each model. $X^{FW,down_{type}}$ represents a downlink port type of the FW of each model. $X^{FW,up_{speed}}$ represents an uplink port speed of the FW of each model. $X^{FW,down_{num}}$ represents a quantity of downlink ports of the FW of each model. $10 - X^{FW,up_{speed}}$ represents whether the uplink port speed of the FW of each model is greater than or equal to 10G. If yes, $w_{21} \times (max(10 - X^{FW,up_{speed}}, 0) \cdot X^{FW})^2$ is not used as a penalty item. If no, $w_{21} \times (max(10 - X^{FW,up_{speed}}, 0) \cdot X^{FW})^2$ is used as a penalty item. $\left\| X^{FW,down_{num}} \cdot X^{FW} \right\|_1 - \left\| X^{AGG} \right\|_1 \geq 0$ represents that a total quantity of downlink ports of recommended FW models needs to be greater than or equal to a quantity of AGGs. When each model of the device (namely, the AGG) at the third layer and the quantity of devices corresponding to each model are already known, the electronic device solves the model recommendation model of the FW by using each model of the AGG and the quantity of devices corresponding to each model, to obtain one or more recommended FW models and the quantity of devices corresponding to each of the one or more recommended models. That is, $X^{FW}$ is solved. The foregoing 10G may be a default requirement on the uplink port speed of the FW of each model. It may be understood that 10G may alternatively be another value, for example, 5G, or another value input by the user.

It should be understood that a method for solving the model recommendation model of the device at each layer may be an interior point method, an exterior point method, a multiplier method, a heuristic method, or the like in operation research optimization. In this implementation, the electronic device first determines, based on the coverage requirement and the first device capability subrequirement of the device at the first layer, the recommended model of the device at the first layer and the quantity of devices corresponding to each recommended model. Then, the electronic device determines, based on each model of a downstream device (starting from the device at the first layer) and a quantity corresponding to each model, a second device capability subrequirement of an upstream device, and a matching requirement between the upstream device and the downstream device, a recommended model of the upstream device and a quantity of devices corresponding to each recommended model. In this way, a device that is at each layer and that is determined in a manner of layer-by-layer matching has a higher matching degree between upstream and downstream devices. This helps avoid a problem such as capability mismatching between the upstream and downstream devices.

In a possible implementation, the electronic device may further obtain user feedback information and popularity information of a device of each model in a set of available devices. The electronic device determines, based on the coverage requirement, the device capability requirement, the matching requirement, the user feedback information, and the popularity information, the model of the device at each layer in the networking structure and the quantity corresponding to the model. The set of available devices is a set of all available devices of models in a database. To be specific, when determining the model of the device at each layer and the quantity corresponding to the model, the electronic device further considers user feedback information and popularity information, that are of each model of the device at each layer, in addition to the networking requirement. Therefore, when the networking structure is determined, the electronic device needs to obtain user feedback information and popularity information of models of various devices included in the networking structure.

In a possible implementation, for each of a plurality of historical networking solutions, the electronic device obtains a user feedback score of a historical user for a device of each model in each historical networking solution. For a device of any model in the plurality of historical networking solutions, the electronic device obtains user feedback information of the device of the any model based on user feedback scores of the device of the any model in different historical networking solutions. All devices of models in the plurality of historical networking solutions include the devices of the models in the set of available devices.

For example, the networking structure includes four types of devices: the FW, the AGG, the ACC, and the AP, and the electronic device may separately obtain user feedback information of the four types of devices.

Step 1: Obtain user feedback information of an AP of each model. The electronic device queries the data table shown in Table 5 in the networking detail database, to obtain user feedback scores of a historical user on the plurality of historical networking solutions such as "adkHk" and "6i6XUrk", and uses a user feedback score of each historical networking solution as the user feedback score on the device of each model in the networking solution. For example, if the user feedback score of the networking solution "adkHk" in Table 5 is 3, user feedback scores of devices of all models in the networking solution are all 3. On this basis, user feedback scores of devices of all models in the plurality of historical networking solutions may be obtained. For example, it is assumed that five networking solutions in the plurality of historical networking solutions all include an AP 1, and user feedback information of the AP 1 is obtained through calculation by using five user feedback scores of the AP 1. For example, the user feedback information of the AP 1 may be an average value of the five user feedback scores, a sum of the five user feedback scores, a weighted sum of the five user feedback scores, or the like.

Step 2: Obtain user feedback information of an ACC of each model. Similarly, for an ACC of any model, user feedback scores of the ACC of any model in different historical networking solutions may be obtained based on a manner in step 1, and user feedback information of the ACC of any model may be calculated by using the user feedback scores of the ACC of any model in the different historical networking solutions.

Step 3: Obtain user feedback information of an AGG of each model. For an AGG of any model, user feedback scores of the AGG of any model in different historical networking solutions may be obtained based on the manner in step 1, and user feedback information of the AGG of any model may be calculated by using the user feedback scores of the AGG of any model in the different historical networking solutions.

Step 4: Obtain user feedback information of an FW of each model. For an FW of any model, user feedback scores of the FW of any model in different historical networking solutions may be obtained based on the manner in step 1, and user feedback information of the FW of any model may be calculated by using the user feedback score of the FW of any model in the different historical networking solutions.

In this implementation, the user feedback score of each historical networking solution is used as the user feedback score of the networking devices of models in each historical networking solution. User feedback information of a device of any model is obtained through calculation based on user feedback scores of the device of any model in the different historical networking solutions. In this way, the user feedback information of the device of each model in the set of available devices may be obtained, so that a recommended model of the device at each layer and a quantity corresponding to each model are subsequently determined based on the user feedback information of the device of each model in the set of available devices.

In a possible implementation, for any device in the set of available devices, a plurality of models registered by the any device within a preset time period are filtered based on a device registration time point. An addition frequency of each of the plurality of models is determined based on a registration quantity of each of the plurality of models within the preset time period. A usage frequency of each of the plurality of models is determined based on a quantity of online times of each of the plurality of models within the preset time period. The popularity information of each of the plurality of models is obtained based on the addition frequency and the usage frequency.

The following uses an example in which the any device is the AP for description. All APs are filtered from the set of available devices, APs, of a plurality of models, registered within the preset time period (for example, the last three months) are filtered from the all APs based on the registration time point in Table 1, and statistics on a registration quantity of an AP of each model are counted. For example, a registration quantity of an AP of a model of "AirEngine 5760-22W" in the last three months is 11000. The APs of the plurality of models are sorted based on the registration quantity of the AP of each model, to obtain ranking of registration quantities of the APs of the models. A sorting manner may be descending or ascending, which is not limited herein. The AP of each model is scored based on the ranking of the registration quantities of the APs of the models, and a score of the registration quantity of the AP of each model is determined as an addition frequency of the AP of each model. Table 6 shows an example of the addition frequency of the AP of each model.

**Table 6**

| Device role | Model | Registration quantity | Ranking | Addition frequency |
|---|---|---|---|---|
| AP | AirEngine 5760-22W | 11000 | 1 | 5 |
| AP | AirEngine 5760-51 | 10000 | 2 | 4.5 |
| AP | AirEngine 5761-11 | 9000 | 3 | 4.5 |

(continued)

| Device role | Model | Registration quantity | Ranking | Addition frequency |
|---|---|---|---|---|
| AP | AirEngine 5761-11W | 8000 | 4 | 4 |
| AP | AirEngine 5761-11WD | 7000 | 5 | 4 |
| AP | AirEngine 5761-12W | 6000 | 6 | 3.5 |
| AP | AirEngine 5761-21 | 5000 | 7 | 3.5 |
| AP | AirEngine 6760-X1 | 4000 | 8 | 3 |
| AP | AirEngine 6761-21 | 3000 | 9 | 3 |
| AP | AirEngine 6761-21T | 2000 | 10 | 2.5 |
| AP | AirEngine 8760-X1-PRO | 1000 | 11 | 2.5 |

For the AP of each model in Table 6, statistics on a quantity of online times of the AP of each model within a preset time period (for example, the last three months) are counted based on the last online time point in Table 1. For example, the quantity of online times of the AP of the model of "AirEngine 5760-22W" in the last three months is 11000. The APs of the plurality of models are sorted based on the quantity of online times of the AP of each model, to obtain ranking of quantities of online times of the APs of the models. A sorting manner may be descending or ascending, which is not limited herein. The AP of each model is scored based on the ranking of the quantities of online times of the APs of the models, and a score of the quantity of online times of the AP of each model is determined as a usage frequency of the AP of each model. Table 7 shows an example of the usage frequency of the AP of each model.

**Table 7**

| Device role | Model | Quantity of online times | Ranking | Usage frequency |
|---|---|---|---|---|
| AP | AirEngine 5760-22W | 11000 | 1 | 5 |
| AP | AirEngine 5760-51 | 10000 | 2 | 4.5 |
| AP | AirEngine 5761-11 | 9000 | 3 | 4.5 |
| AP | AirEngine 5761-11W | 8000 | 4 | 4 |
| AP | AirEngine5761-11WD | 7000 | 5 | 4 |
| AP | AirEngine 5761-12W | 6000 | 6 | 3.5 |
| AP | AirEngine 5761-21 | 5000 | 7 | 3.5 |
| AP | AirEngine 6760-X1 | 4000 | 8 | 3 |
| AP | AirEngine 6761-21 | 3000 | 9 | 3 |
| AP | AirEngine 6761-21T | 2000 | 10 | 2.5 |
| AP | AirEngine8760-X1-PRO | 1000 | 11 | 2.5 |

For the AP of each model, popularity information of the AP of each model is obtained through calculation by using the addition frequency of the AP of each model in Table 6 and the usage frequency of the AP of each model in Table 7. For example, the popularity information of the AP of each model may be an average value, a weighted sum, a weighted average value, or the like of the addition frequency of the AP of each model and the usage frequency of the AP of each model. Table 8 shows an example of the popularity information of the AP of each model.

**Table 8**

| Device role | Model | Addition frequency | Usage frequency | Popularity information |
|---|---|---|---|---|
| AP | AirEngine 5760-22W | 5 | 5 | 5 |
| AP | AirEngine 5760-51 | 4.5 | 4.5 | 4.5 |
| AP | AirEngine 5761-11 | 4.5 | 4.5 | 4.5 |
| AP | AirEngine 5761-11W | 4 | 4 | 4 |

(continued)

| Device role | Model | Addition frequency | Usage frequency | Popularity information |
|---|---|---|---|---|
| AP | AirEngine 5761-11WD | 4 | 4 | 4 |
| AP | AirEngine 5761-12W | 3.5 | 3.5 | 3.5 |
| AP | AirEngine 5761-21 | 3.5 | 3.5 | 3.5 |
| AP | AirEngine 6760-X1 | 3 | 3 | 3 |
| AP | AirEngine 6761-21 | 3 | 3 | 3 |
| AP | AirEngine 6761-21T | 2.5 | 2.5 | 2.5 |
| AP | AirEngine8760-X1-PRO | 2.5 | 2.5 | 2.5 |

It should be understood that, in the networking structure, a manner of obtaining popularity information of an FW, an AGG, and an ACC of each model are the same as that of the AP. Details are not described herein again. In this implementation, the electronic device determines the popularity information of the device of each model based on the usage frequency and the addition frequency of the device of each model, to subsequently determine, based on the popularity information of the device of each model, the recommended model of the device at each layer and the quantity corresponding to each model.

In a possible implementation, the electronic device determines, based on the quantity of devices at the first layer, the user feedback information and the popularity information, and the first device capability subrequirement, the one or more models of the device at the first layer and the quantity of devices corresponding to each of the one or more models of the device at the first layer. The electronic device determines, based on the model of the device at the first layer, the quantity of devices corresponding to the model of the device at the first layer, the second device capability subrequirement, the user feedback information and the popularity information, and a matching requirement between devices at different layers, one or more models of the device at the another layer and a quantity of devices corresponding to the one or more models of the device at the another layer.

For example, when the user feedback information and the popularity information of the AP of each model are obtained, the user feedback information and the popularity information of the AP of each model are used as an optimization target, and a model of the AP and a quantity corresponding to each model are determined based on the optimization target, a quantity of APs and the first device capability subrequirement of the AP. Similarly, the determining process may be implemented based on the model recommendation model of the AP. For example, the model recommendation model is shown as follows, and includes a hard condition that is represented by an s.t part and that the AP needs to meet and a soft condition that is represented by a Min part and that the AP may meet. In this case, the Min part may include the optimization target for the user feedback information and the popularity information of the AP of each model.

$$\text{Min } w_{11} \times \left( \left( X^{AP,Quality} \neq \text{"High"} \right) \cdot X^{AP} \right)^2 + w_{12}$$

$$\times \left( \left( X^{AP,Scene} \neq \text{"Education"} \right) \cdot X^{AP} \right)^2 + \cdots + w_{21}$$

$$\times \left( max(1 - X^{AP,upspeed}, 0) \cdot X^{AP} \right)^2 + \cdots - w_{32} \times \left( X^{AP,Prefer} \cdot X^{AP} \right)$$

$$- w_{33} \times \left( X^{AP,Popular} \cdot X^{AP} \right)$$

$$\text{s.t. } \| \left( X^{AP,IoT} = \text{"Y"} \right) \cdot X^{AP} \|_1 - \text{"ap\_num"} = 0$$

$$\| X^{AP} \|_1 - \text{"ap\_num"} = 0$$

$X^{AP,Prefer}$ represents the user feedback information of the AP of each model, $X^{AP,Prefer} \cdot X^{AP}$ represents a sum of the user feedback information of the AP of each model multiplied by a quantity of APs of the corresponding model, $X^{AP,Popular}$ represents the popularity information of the AP of each model, $X^{AP,Popular} \cdot X^{AP}$ represents a sum of the popularity information of the AP of each model multiplied by a quantity of APs of each model, and $w_{31}$, $w_{32}$, ... each represent a preset weight coefficient of each optimization target. The one or more recommended models of the AP and a quantity of devices corresponding to each of the one or more recommended models may also be obtained by solving the model recommendation model of the AP.

For example, when the user feedback information and the popularity information of the ACC of each model are obtained, the user feedback information and the popularity information of the ACC of each model are used as an optimization target, and a model of the ACC and a quantity corresponding to each model are determined with reference to the second device capability subrequirement of the ACC, the matching requirement between the ACC and the AP, and each model of the AP and the quantity of devices corresponding to each model. Similarly, the determining process may be implemented based on the model recommendation model of the ACC. For example, the model recommendation model is shown as follows, and includes a hard condition that is represented by an s.t part and that the ACC needs to meet and a soft condition that is represented by a Min part and that the ACC may meet. In this case, the Min part may include an optimization target for the user feedback information and the popularity information of the ACC of each model.

$$\text{Min } w_{11} \times \left( \left( X^{ACC,Quality} \neq \text{"High"} \right) \cdot X^{ACC} \right)^2 + w_{12}$$

$$\times \left( \left( X^{ACC,Video_{monitor}} \neq \text{"Y"} \right) \cdot X^{ACC} \right)^2 + \cdots + w_{21}$$

$$\times \left( max(10 - X^{ACC,up_{speed}}, 0) \cdot X^{ACC} \right)^2 + \cdots - w_{32}$$

$$\times \left( X^{ACC,Prefer} \cdot X^{ACC} \right) - w_{33} \times \left( X^{ACC,Popular} \cdot X^{ACC} \right)$$

$$\text{s.t. } \left\| X^{ACC,down_{num}} \cdot X^{ACC} \right\|_1 - \text{"ap\_num"} - \text{"wired\_num"} \geq 0$$

$$\left\| X^{ACC,PoE_{num}} \cdot X^{ACC} \right\|_1 - \text{"ap\_num"} \geq 0$$

$$\left\| \left( X^{ACC,Distributed} = \text{"Y"} \right) \cdot X^{ACC} \right\|_1 = 0$$

$X^{ACC,Prefer}$ represents the user feedback information of the ACC of each model, $X^{ACC,Prefer} \cdot X^{ACC}$ represents a sum of the user feedback information of the ACC of each model multiplied by a quantity of ACCs of the corresponding model, $X^{ACC,Popular}$ represents the popularity information of the ACC of each model, and $X^{ACC,Popular} \cdot X^{ACC}$ represents a sum of the popularity information of the ACC of each model multiplied by a quantity of ACCs of the corresponding model. The one or more recommended models of the ACC and the quantity of devices corresponding to each of the one or more recommended models may also be obtained by solving the model recommendation model of the ACC.

For example, when the user feedback information and the popularity information of the AGG of each model are obtained, the user feedback information and the popularity information of the AGG of each model are used as an optimization target, and a model of the AGG and a quantity corresponding to each model are determined with reference to the second device capability subrequirement of the AGG, the matching requirement between the AGG and the ACC, and each model of the ACC and the quantity of devices corresponding to each model. Similarly, the determining process may be implemented based on the model recommendation model of the AGG. For example, the model recommendation model is shown as follows, and includes a hard condition that is represented by an s.t part and that the AGG needs to meet and a soft condition that is represented by a Min part and that the AGG may meet. In this case, the Min part may include the optimization target for the user feedback information and the popularity information of the AGG of each model.

$$\text{Min } w_{11} \times \left( \left( X^{AGG,Quality} \neq \text{"High"} \right) \cdot X^{AGG} \right)^2 + w_{12}$$

$$\times \left( \left( X^{AGG,down_{type}} \neq \text{"Optical"} \right) \cdot X^{AGG} \right)^2 + \cdots + w_{21}$$

$$\times (max(10 - X^{AGG,up_{speed}}, 0) \cdot X^{AGG})^2 + \cdots - w_{32}$$

$$\times (X^{AGG,Prefer} \cdot X^{AGG}) - w_{33} \times (X^{AGG,Popular} \cdot X^{AGG})$$

$$\text{s. t.} \quad \|X^{AGG,down_{num}} \cdot X^{AGG}\|_1 - \|X^{ACC}\|_1 \geq 0$$

$X^{AGG,Prefer}$ represents the user feedback information of the AGG of each model, $X^{AGG,Prefer} \cdot X^{AGG}$ represents a sum of the user feedback information of the AGG of each model multiplied by a quantity of AGGs of the corresponding model, $X^{AGG,Popular}$ represents the popularity information of the AGG of each model, and $X^{AGG,Popular} \cdot X^{AGG}$ represents a sum of the popularity information of the AGG of each model multiplied by a quantity of AGGs of the corresponding model. The one or more recommended models of the AGG and the quantity of devices corresponding to each of the one or more recommended models may also be obtained by solving the model recommendation model of the AGG.

For example, when the user feedback information and the popularity information of the FW of each model are obtained, the user feedback information and the popularity information of the FW of each model are used as an optimization target, and a model of the FW and a quantity corresponding to each model are determined with reference to the second device capability subrequirement of the FW, the matching requirement between the FW and the AGG, and each model of the AGG and the quantity of devices corresponding to each model. Similarly, the determining process may be implemented based on the model recommendation model of the FW. For example, the model recommendation model is shown as follows, and includes a hard condition that is represented by an s.t part and that the FW needs to meet and a soft condition that is represented by a Min part and that the FW may meet. In this case, the Min part may include the optimization target for the user feedback information and the popularity information of the FW of each model.

$$\text{Min} \quad w_{11} \times \left( \left( X^{FW,Quality} \neq \text{"High"} \right) \cdot X^{FW} \right)^2 + w_{12}$$

$$\times \left( \left( X^{FW,down_{type}} \neq \text{"Optical"} \right) \cdot X^{FW} \right)^2 + \cdots + w_{21}$$

$$\times (max(10 - X^{FW,up_{speed}}, 0) \cdot X^{FW})^2 + \cdots - w_{32}$$

$$\times (X^{FW,Prefer} \cdot X^{FW}) - w_{33} \times (X^{FW,Popular} \cdot X^{FW})$$

$$\text{s. t.} \quad \|X^{FW,down_{num}} \cdot X^{FW}\|_1 - \|X^{AGG}\|_1 \geq 0$$

$X^{FW,Prefer}$ represents the user feedback information of the FW of each model, $X^{FW,Prefer} \cdot X^{FW}$ represents a sum of the user feedback information of the FW of each model multiplied by a quantity of FWs of the corresponding model, $X^{FW,Popular}$ represents the popularity information of the FW of each model, and $X^{FW,Popular} \cdot X^{FW}$ represents a sum of the popularity information of the FW of each model multiplied by a quantity of FWs of the corresponding model. The one or more recommended models of the AGG and the quantity of devices corresponding to each of the one or more recommended models may also be obtained by solving the model recommendation model of the FW.

In this implementation, when recommending a device, in addition to a matching requirement between upstream and downstream devices, the electronic device further considers user feedback information and popularity information of a device at a layer, so that a model, of a device, that is recommended to the user may be optimized based on a popular model and a model with a good historical feedback.

204: Connect devices at two adjacent layers in the networking structure, to generate the networking solution.

For the recommended model of the device at each layer and a recommended quantity of devices at each layer in the networking structure, the electronic device connects the devices at the two adjacent layers based on an upstream and downstream relationship between the devices, to generate the networking topology including a connection relationship. In an optional implementation, a bottom-up connection manner is used, to obtain a tree-structured networking topology shown in FIG. 4. FIG. 4 shows a networking structure including an AP, an ACC, an AGG, and an FW.

Step 1: Connect the AP and a wired terminal to the ACC, to form ACC+AP/wired terminal networking. For example, if a quantity of downlink ports of an ACC of a specific model is 20, a next ACC is connected to after the downlink ports of the ACC are fully connected. This is performed in sequence until all APs/wired terminals are connected.

Step 2: Connect the ACC to the AGG, to form AGG+ACC+AP/wired terminal networking.

Step 3: Connect the AGG to the FW, to form FW+AGG+ACC+AP/wired terminal networking. Finally, the FW is connected to the internet (Internet).

For example, if a quantity of APs required in the networking requirement is 0 (in other words, the user does not need an AP), and a quantity of wired terminals is less than a quantity of downlink ports of a single FW, when the downlink port of the FW is an electrical port, the FW may be directly connected to the wired terminal. If $\|X^{AGG}\|_1 = 0$, the user does not need the AGG, and the FW may be directly connected to the ACC.

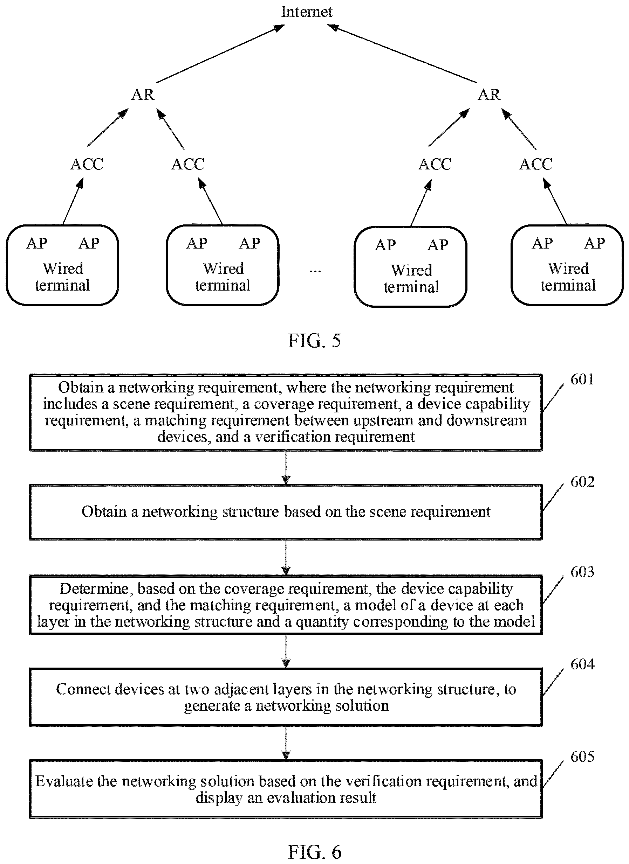

It should be noted that, the networking structure including the AP, the ACC, the AGG, and the FW shown in FIG. 4 is generally used in an industry/a scene such as a supermarket or a branch office. However, in an industry/a scene such as a villa or a store, a specified networking structure is usually a four-layer structure shown in FIG. 5, to be specific, includes the internet, a router (access router, AR), an ACC, and an AP/a wired terminal. In other words, a scene requirement of the user determines a networking structure obtained by the electronic device, and the networking structure determines a scale of the networking solution finally generated, a model of a device in the networking solution, and the like. For example, in comparison with the networking structure shown in FIG. 5, the networking structure shown in FIG. 4 has a larger scale and a more complex structure. Therefore, a more complex network configuration is needed, and a higher requirement is imposed on device performance. In addition to the networking structure, a network service requirement varies in different industries/scenes. For example, in the supermarket scene, the user has a high requirement on quality of a service such as an electronic price tag, a cashier, an electronic scale, a handheld PDA, and a camera. In the branch office scene, the user has a high requirement on quality of a service such as a wired office, office WiFi, reception, an IoT, and a camera. Therefore, in embodiments of this application, for different industries/scenes, a device model can be targetedly recommended.

It can be learned that, in this application, the electronic device may recommend, based on the scene requirement, the coverage requirement, the device capability requirement, and the matching requirement between the upstream and downstream devices, a model of a networking device and a quantity corresponding to each model, and then generate the networking solution based on the recommended device model and the quantity corresponding to each model. In this way, less manual intervention is involved in device selection, networking topology, and the like in network deployment, so that efficiency of the device selection and the networking topology generation is improved, to improve efficiency of the network deployment. In addition, the electronic device further carries the matching requirement between the upstream and downstream devices in the networking requirement. This helps avoid a problem such as capability mismatching between the upstream and downstream devices that are connected in the networking solution, and can improve a capability of collaboration between the upstream and downstream devices, to help improve overall performance of the networking solution. The user only needs to input the networking requirement to obtain the recommended networking solution. This reduces difficulty in performing network planning by the user.

FIG. 6 is a schematic flowchart of another networking method according to an embodiment of this application. The networking method may be performed by an electronic device. The networking method includes but is not limited to the following steps or operations.

601: Obtain a networking requirement, where the networking requirement includes a scene requirement, a coverage requirement, a device capability requirement, a matching requirement between upstream and downstream devices, and a verification requirement.

The verification requirement may be input by a user, or may be preset. The verification requirement includes a verification subrequirement for model requirement matching and/or a verification subrequirement for connection relationship matching. For example, the verification subrequirement for model requirement matching may be whether a device in a networking solution has an IoT capability, whether quality of the device matches quality required by the user, or whether an application scene of the device matches a scene required by the user. The verification subrequirement for connection relationship matching may be whether a central AP of agile distributed WiFi matches a remote unit, whether a PoE power supply capability of a connected upstream device meets a PoE power supply requirement of a downstream device, or whether a port type and a port speed of the connected upstream device match a port type and a port speed of the downstream device.

602: Obtain a networking structure based on the scene requirement.

603: Determine, based on the coverage requirement, the device capability requirement, and the matching requirement, a model of a device at each layer in the networking structure and a quantity corresponding to the model.

604: Connect devices at two adjacent layers in the networking structure, to generate the networking solution.

For specific implementations of steps 602 to 604, refer to related descriptions of steps 202 to 204 in embodiments shown in FIG. 2, and a same or similar beneficial effect can be achieved.

605: Evaluate the networking solution based on the verification requirement, and display an evaluation result.

For example, in step 605, the networking solution may be evaluated from two aspects: model requirement matching and connection relationship matching.

For example, model requirement matching of each device in the networking solution is evaluated based on the verification subrequirement for model requirement matching, to obtain a model requirement matching score of the networking solution. The verification subrequirement for model requirement matching is classified into an item that needs to be met and an item that is met as much as possible. The item that needs to be met refers to a requirement that the networking solution needs to meet. If the requirement is not met, a network cannot be run normally. The item that is met as much as possible is a requirement that the networking solution should meet as much as possible. Meeting the requirement can ensure better network running of the networking solution. Whether the networking solution meets each verification subrequirement for model requirement matching is determined. If the networking solution meets an item that needs to be met in the verification subrequirement for model requirement matching, a score of the item is 0. If the networking solution does not meet an item that needs to be met in the verification subrequirement for model requirement matching, a score of the item is - $w_h$. On this basis, a model requirement matching score of each model requirement matching verification subrequirement may be obtained. The model requirement matching score of the networking solution is obtained through calculation based on the model requirement matching score of each verification subrequirement for model requirement matching. For example, a sum, a weighted sum, an average value, or the like of model requirement matching scores of the verification subrequirement for model requirement matching is calculated. $w_h$ may be set based on importance of the verification subrequirement for model requirement matching.

For example, connection relationship matching between devices in the networking solution is evaluated based on the verification subrequirement for connection relationship matching, to obtain a connection relationship matching score of the networking solution. The verification subrequirement for connection relationship matching is also classified into an item that needs to be met and an item that is met as much as possible. Whether a connection line between every two devices meets each verification subrequirement for connection relationship matching in the networking solution is determined. For example, whether a connection between an AP 1 and an ACC 1 meets the item whether the PoE power supply capability of the connected upstream device meets the PoE power supply requirement of the downstream device. If the networking solution meets an item that needs to be met in the verification subrequirement for connection relationship matching, a score of the item is $w_s$. If the networking solution does not meet an item that needs to be met in the verification subrequirement for connection relationship matching, a score of the item is 0. On this basis, a connection relationship matching score of each verification subrequirement for connection relationship matching may be obtained. The connection relationship matching score of the networking solution is obtained through calculation based on the connection relationship matching score of each verification subrequirement for connection relationship matching. For example, a sum, a weighted sum, an average value, or the like of connection relationship matching scores of the verification subrequirement for connection relationship matching is calculated. $w_s$ may be set based on importance of the verification subrequirement for connection relationship matching.

After obtaining the model requirement matching score of the networking solution and the connection relationship matching score of the networking solution, the electronic device may further obtain a networking score based on the model requirement matching score of the networking solution and the connection relationship matching score of the networking solution. The electronic device may calculate a sum, a weighted sum, an average value, and the like of the model requirement matching score of the networking solution and the connection relationship matching score of the networking solution, to obtain the networking score of the networking solution, and display the networking score to the user as one of evaluation results.

In this implementation, evaluation and verification are performed on the networking solution from the model requirement matching, the connection relationship matching, and other aspects. The networking score is obtained through calculation based on the model requirement matching score and the connection relationship matching score. The networking score can reflect a matching degree between the networking solution and a user requirement and overall performance. Therefore, the networking score is displayed to the user, so that the user may determine, based on the networking score, whether to adopt the networking solution. In addition, evaluation and verification on the networking solution help detect a possible problem, such as capability mismatching between upstream and downstream devices, in the networking solution, so that the user adjusts the networking requirement previously input, to generate a networking solution with higher overall performance.

In a possible implementation, for the generated networking solution, the electronic device generates a networking ID of the networking solution, and displays the networking solution and the networking score of the networking solution to the user. The user may determine whether to adopt the networking solution based on the networking score and perform a related operation on a man-machine interaction interface. For example, the user clicks a button of "adopt" or "not adopt" and inputs a user feedback score of the networking solution. Based on an operation of the user, the electronic device may generate an adoption identifier indicating whether the user adopts the networking solution. The adoption identifier, the user feedback score, and the networking ID are associated and stored in a networking detail database. The networking requirement of the networking solution, a device model in the networking solution, and a quantity of devices corresponding to each model are stored in the networking detail database.

In a possible implementation, the electronic device determines the networking score of the networking solution based on a plurality of networking scores of a plurality of target historical networking solutions according to a preset scoring rule.

The electronic device may use a weighted sum of the model requirement matching score of the networking solution and the connection relationship matching score of the networking solution as a candidate networking score of the networking solution. A plurality of target historical networking solutions that belong to a same application scene as the generated networking solution are determined from the plurality of historical networking solutions in the database. For example, if an application scene of the generated networking solution is a supermarket, all historical networking solutions whose application scenes are the supermarket are determined. A networking score of each of the plurality of target historical networking solutions is obtained, and statistics of a plurality of networking scores of the plurality of target historical networking solutions are calculated, where an example of the statistics is an average value or a percentile. Table 9 shows an example of the preset scoring rule.

**Table 9**

| Networking score | 5.0 | 4.5 |
|---|---|---|
| Condition | $score_0 \geq \tau^{99\%}$ | $\tau^{99\%} > score, \geq \tau^{95\%}$ |
| Networking score | 4.0 | 3.5 |
| Condition | $\tau^{95\%} > score_0 \geq \tau^{90\%}$ | $\tau^{90\%} > score_0 \geq \tau^{80\%}$ |
| Networking score | 3.0 | 2.5 |
| Condition | $\tau^{80\%} > score_0 \geq \tau^{60\%}$ | $\tau^{60\%} > score_0 \geq \tau^{40\%}$ |
| Networking score | 2.0 | 1.5 |
| Condition | $\tau^{40\%} > score_0 \geq \tau^{20\%}$ | $\tau^{20\%} > score_0 \geq \tau^{10\%}$ |
| Networking score | 1.0 | 0.5 |
| Condition | $\tau^{10\%} > score_0 \geq \tau^{5\%}$ | $\tau^{5\%} > score_0 \geq \tau^{1\%}$ |
| Networking score | 0 | |
| Condition | $\tau^{1\%} > score_0$ | |

In Table 9, statistics of the plurality of networking scores of the plurality of target historical networking solutions are percentiles. For example, $\tau^{99\%}$ represents a 99th percentile of the plurality of networking scores of the plurality of target historical networking solutions, and $\tau^{90\%}$ represents a 90th percentile of the plurality of networking scores of the plurality of target historical networking solutions. $score_0$ represents a candidate networking score that is of the networking solution and that is obtained through calculation. In the preset scoring rule shown in Table 9, a plurality of conditions are set based on the statistics of the plurality of networking scores of the plurality of target historical networking solutions. If the candidate networking score meets a condition, a networking score corresponding to the condition is used as a networking score of the networking solution, to normalize the networking score of the networking solution to a preset interval. For example, if $score_0 \geq \tau^{99\%}$, the networking score of the networking solution is 5.0; if $\tau^{99\%} > score_0 \geq \tau^{95\%}$, the networking score of the networking solution is 4.5. In Table 9, the preset interval is [0,5]. In this implementation, whether the candidate networking score meets a condition set based on the statistics can reflect a performance level of the networking solution in the plurality of target historical networking solutions in a same application scene. The electronic device may determine the networking score of the networking solution based on the performance level according to the preset scoring rule. Therefore, the networking score can intuitively reflect the performance level of the networking solution in historical networking solutions in a same industry/application scene.

In a possible implementation, the electronic device may further determine a user satisfaction score of the generated networking solution based on a plurality of user feedback scores respectively corresponding to the plurality of determined target historical networking solutions, and display the user satisfaction score of the networking solution. Specifically, a user feedback score of each target historical networking solution is used as a user feedback score of a device of each model in each target historical networking solution. For example, if a user feedback score of the target historical networking solution "adkHk" in Table 5 is 3, user feedback scores of devices of all models in the target historical networking solution are 3. It is assumed that the target historical networking solution "adkHk" includes an AP 1, and the AP 1 is further used in other nine target historical networking solutions. In this case, statistics of 10 user feedback scores of the AP 1 are obtained, where an example of the statistics is an average value or a median. The statistics are used as a user satisfaction score of the AP 1. Therefore, a user satisfaction score of a device of each model in the plurality of target historical networking solutions may be obtained. If the networking solution includes devices of models such as the AP 1, an ACC 1, an ACC 2, an AGG 1, and an FW 2, the user satisfaction score of the networking solution is obtained through calculation based on user satisfaction scores of these devices. For example, an average value, a weighted sum, or the like of the user satisfaction scores of these devices is calculated. In this implementation, the user satisfaction score may be used as a word of mouth of a historical user for a device of each model in the networking solution. The user satisfaction score of the networking solution is displayed to the user. The user satisfaction score of the networking solution may be used as another reference indicator in addition to the networking score. This helps the user determine whether to adopt the networking solution.

In a possible implementation, the electronic device may further display, as an evaluation result, a model requirement matching score of a device of each model in the networking solution and a connection relationship matching score corresponding to a connection line between every two devices in the networking solution. For example, each verification subrequirement for model requirement matching such as whether a device has an IoT capability and a score corresponding to each verification subrequirement for model requirement matching are displayed, and each verification subrequirement for connection relationship matching such as whether a PoE power supply capability of a connected upstream device meets a PoE power supply requirement of a downstream device and a score corresponding to each verification subrequirement for connection relationship matching are displayed.

In a possible implementation, a level may be set for each verification subrequirement for model requirement matching and each verification subrequirement for connection relationship matching. The level may represent importance of a verification subrequirement for model requirement matching of a device of each model and a verification subrequirement for connection relationship matching of every two devices (or represent attention degrees of a user on the verification subrequirement for model requirement matching of the device of each model and the verification subrequirement for connection relationship matching of every two devices). The electronic device may display, based on the level, each verification subrequirement for model requirement matching and a model requirement matching score corresponding to the verification subrequirement for model requirement matching, and each verification subrequirement for connection relationship matching and a connection relationship matching score corresponding to the verification subrequirement for connection relationship matching, so that the user intuitively learns that the networking solution meets a poor verification subrequirement, and this triggers the user to adjust the networking requirement of the user.

For example, the electronic device may display, in a descending sorting manner of the level, each verification subrequirement for model requirement matching and the model requirement matching score corresponding to the verification subrequirement for model requirement matching, and each verification subrequirement for connection relationship matching and the connection relationship matching score corresponding to the verification subrequirement for connection relationship matching.

In a possible implementation, the model requirement matching score of the device of each model and/or the connection relationship matching score corresponding to the connection line between the every two devices include/includes a scoring item whose score is less than a preset score. For example, the preset score may be added to the model requirement matching score of the device of each model and the connection relationship matching score corresponding to the connection line between the every two devices. When displaying each verification subrequirement for model requirement matching and the model requirement matching score corresponding to the verification subrequirement for model requirement matching, and each verification subrequirement for connection relationship matching and the connection relationship matching score corresponding to the verification subrequirement for connection relationship matching, the electronic device may identify the scoring item whose score is less than the preset score. For example, if a connection relationship matching score of the item whether the PoE power supply capability of the connected upstream device meets the PoE power supply requirement of the downstream device is 3.5, which is less than the preset score of 5, the item may be highlighted. In this way, the user can intuitively obtain a requirement item with a low matching degree, and then the user may adjust, based on the scoring item whose score is less than the preset score, requirement information previously input. For example, a PoE power supply speed requirement of the AP is added in addition to the requirement information previously input. The electronic device may receive a new networking requirement input by the user, and regenerate a networking solution based on the new networking requirement. It should be understood that, a scoring item that is about a power supply speed and that is less than the preset score indicates that the networking solution meets a poor verification subrequirement. Therefore, displaying the scoring item whose score is less than the preset score may trigger the user to adjust the requirement information previously input by the user, so that the networking solution regenerated by the electronic device can better meet the scoring item whose score is less than the preset score.

The following shows an example of recommended networking in a supermarket scene.

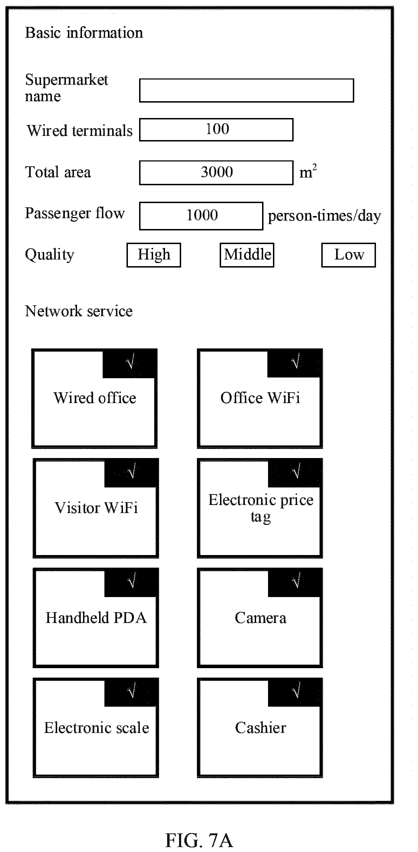

(1) Obtain a supermarket networking requirement input by the user. FIG. 7A is a schematic diagram of a networking requirement input interface according to an embodiment of this application. As shown in FIG. 7A, the supermarket networking requirement may include a quantity (which is, for example, 100) of wired terminals, a total area (which is, for example, 3000 square meters), a passenger flow (which is, for example, 1000 person-times/day), and quality (which is, for example, high, middle, or low) and a network service needed by a supermarket. For example, the network service may be a wired office, office WiFi, visitor WiFi, an electronic price tag, a cashier, an electronic scale, a handheld PDA, or a camera. A scene requirement may be determined based on a supermarket name in basic information in FIG. 7A.

(2) Determine a networking structure corresponding to the supermarket scene. For example, the networking structure may be a structure that is shown in FIG. 4 and that includes four layers of devices such as an AP, an ACC, an AGG, and an FW.

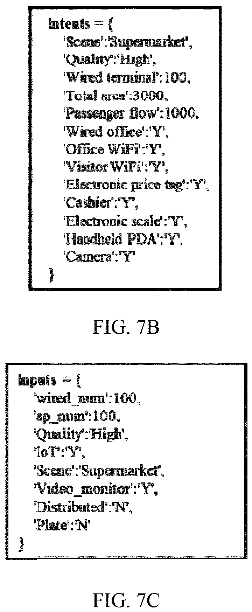

(3) Read the supermarket networking requirement, code the supermarket networking requirement, and construct, based on a coded supermarket networking requirement and a preset matching requirement between upstream and downstream devices, an input condition of supermarket networking. FIG. 7B is a schematic diagram of coded supermarket networking according to an embodiment of this application. In FIG. 7B, 'Scene':'Supermarket' represents that an application scene of a user network is a supermarket, 'Quality':'High' represents that device quality required by a user is high, 'Wired terminal': 100 represents that a quantity of wired terminals is 100, 'Total area':3000 represents that a total area is 3000 square meters, 'Passenger flow':1000 represents that a passenger flow is 1000 person-times per day, 'Wired office':'Y' represents that a wired office service is needed, 'Visitor WiFi':'Y' represents that an office WiFi service is needed, 'Visitor WiFi':'Y' represents that a visitor WiFi service is needed, 'Electronic price tag':'Y' represents that an electronic price tag service is needed, 'Handheld PDA':'Y' represents that a handheld PDA service is needed, 'Camera':'Y' represents that a camera service is needed, 'Electronic scale':'Y' represents that an electronic scale service is needed, and 'Cashier':'Y' represents that a cashier service is needed. The input condition is constructed based on the coded supermarket networking requirement and the matching requirement between the upstream and downstream devices. FIG. 7C shows an example of a part of the input condition. In FIG. 7C, 'wired_num':100 represents that a quantity of wired terminals required by a user is 100, 'ap_num': 100 represents that a quantity of APs required by the user is 100, 'IoT':'Y' represents that the user needs a device having an internet of things function, 'Video_monitor':'Y' represents that the user needs a device having a video surveillance function, 'Distributed':'N' represents that the user does not need agile distributed WiFi, and 'Plate:'N' represents that the user does not need a plate AP. The input condition includes a hard condition and a soft condition of a device at each layer.

(4) Obtain user feedback information and popularity information of models of four types of devices such as an AP, an ACC, an AGG, and an FW. A model recommendation model of the device at each layer is constructed based on the soft condition, the hard condition, user feedback information, and popularity information of the device at each layer. The model recommendation model of the device at each layer is solved, to obtain one or more recommended models of the device at each layer and a quantity of devices corresponding to each recommended model.

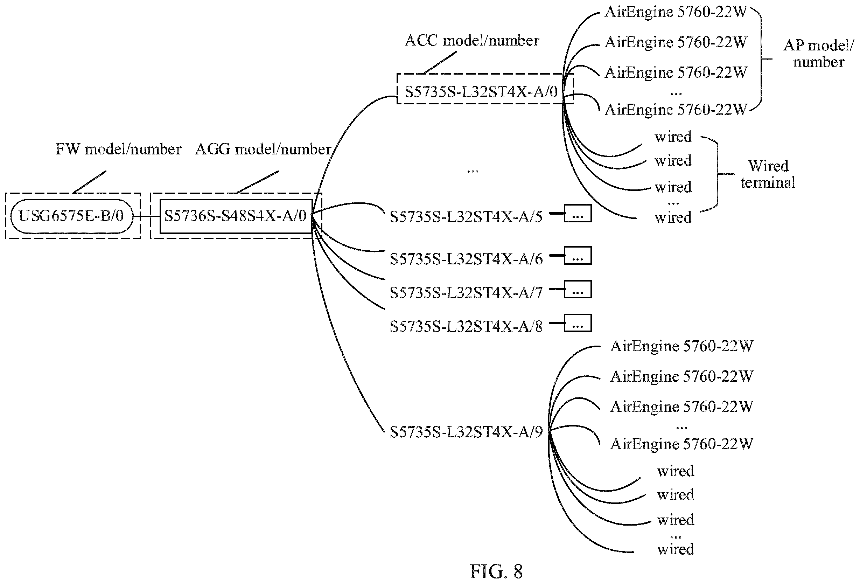

(5) Connect devices at two adjacent layers based on an upstream and downstream relationship between devices, to generate a supermarket networking topology. FIG. 8 is a schematic diagram of a supermarket networking topology according to an embodiment of this application. FIG. 8 includes four types of devices in a networking structure corresponding to a supermarket scene, a recommended model of each device, a quantity of devices corresponding to the model, and a wired terminal, for example, a model/number of an FW, a model/number of an AGG, a model/number of an ACC, and a model/number of an AP.

(6) The supermarket networking topology is evaluated based on a preset verification requirement, to obtain a networking score of the supermarket networking topology. For example, the supermarket networking topology is verified from two aspects: model requirement matching and connection relationship matching, and the networking score of the topology is 3.5.

(7) Display the supermarket networking topology to the user and display an evaluation result in step 6. The evaluation result includes the networking score and a score of each evaluation item. For example, the electronic device may display the supermarket networking topology, the networking score of the networking topology, each evaluation item and the score of each evaluation item on a man-machine interaction interface, and the user may determine, based on the networking score, whether to adopt the supermarket networking topology. For example, the user may click a button of "adopt" or "not adopt" on the man-machine interaction interface, and input a user feedback score of the supermarket networking topology. In addition, the user may intuitively view, based on each evaluation item and the score of each evaluation item that are displayed on the man-machine interaction interface, an evaluation item that the supermarket networking topology does not meet. For example, if quality, of an AP, required by the user is high, but quality of an AP in the supermarket networking topology is medium, a score of a scoring item "whether quality of an AP in a networking topology meets quality required by the user" is lower than a preset score of the scoring item. For example, the preset score is 5, and the score of the scoring item is 0. In this case, the user may input a new supermarket networking requirement, for example, adjust the quality of the AP in the supermarket networking requirement in step (1). The electronic device regenerates a supermarket networking topology based on the new supermarket networking requirement, and evaluates and displays the new supermarket networking topology. If the new networking topology meets a user requirement, the user may adopt the networking solution, purchase/use a related device based on the networking solution, and connect, based on the networking solution, the related device to complete network deployment of the user. In this solution, the networking solution may be automatically generated for the user based on the networking requirement of the user. This greatly reduces a labor input in the network deployment and improves efficiency of the network deployment. In addition, in this solution, the networking solution is further generated based on the matching requirement between the devices. This avoids a problem of capability mismatching between the upstream and downstream devices, and further improves network performance.

The foregoing describes in detail the method in embodiments of this application, and the following provides an apparatus in embodiments of this application.

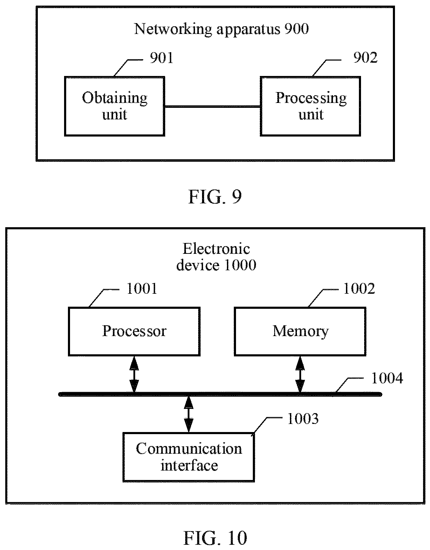

FIG. 9 is a schematic diagram of a structure of a networking apparatus 900 according to an embodiment of this application. The apparatus 900 has a function of implementing the networking method shown in FIG. 2 or FIG. 6. The function may be implemented by hardware, or may be implemented by hardware by executing corresponding software. The hardware or the software includes one or more modules corresponding to the foregoing function.

In a possible implementation, the apparatus 900 includes an obtaining unit 901 and a processing unit 902. The obtaining unit 901 is configured to obtain a networking requirement, where the networking requirement includes a scene requirement, a coverage requirement, a device capability requirement, and a matching requirement between upstream and downstream devices. The processing unit 902 is configured to obtain a networking structure based on the scene requirement. The processing unit 902 is further configured to determine, based on the coverage requirement, the device capability requirement, and the matching requirement, a model of a device at each layer in the networking structure and a quantity corresponding to the model. The processing unit 902 is further configured to connect devices at two adjacent layers in the networking structure, to generate a networking solution.

In a possible implementation, the device capability requirement includes a first device capability subrequirement and a second device capability subrequirement. The first device capability subrequirement indicates a capability requirement of a device at the first layer in the networking structure. The second device capability subrequirement indicates a capability requirement of a device at another layer other than the device at the first layer in the networking structure. The processing unit 902 is specifically configured to: determine, based on the coverage requirement and the first device capability subrequirement, a model of the device at the first layer and a quantity of devices corresponding to the model of the device at the first layer, and determine, based on the model of the device at the first layer, the quantity of devices corresponding to the model of the device at the first layer, the second device capability subrequirement, and the matching requirement, a model of the device at another layer and a quantity of devices corresponding to the model of the device at the another layer.

In a possible implementation, the processing unit 902 is specifically configured to: determine a quantity of the devices at the first layer based on the coverage requirement, and determine, based on the quantity of the devices at the first layer and the first device capability subrequirement, one or more models of the device at the first layer and a quantity of devices corresponding to each of the one or more models of the device at the first layer.

In a possible implementation, the processing unit 902 is specifically configured to: obtain user feedback information and popularity information of a device of each model in a set of available devices, and determine, based on the coverage requirement, the device capability requirement, the matching requirement, the user feedback information, and the popularity information, the model of the device at each layer in the networking structure and the quantity corresponding to the model.

In a possible implementation, the processing unit 902 is specifically configured to: determine, based on the quantity of the devices at the first layer, the first device capability subrequirement, the user feedback information, and the popularity degree, one or more models of the device at the first layer and the quantity of devices corresponding to each of the one or more models of the device at the first layer, and determine, based on the model of the device at the first layer, the quantity of devices corresponding to the model of the device at the first layer, the second device capability subrequirement, the matching requirement, the user feedback information, and the popularity information, one or more models of the device at another layer and a quantity of devices corresponding to the one or more models of the device at another layer.

In a possible implementation, the processing unit 902 is specifically configured to: for each of the plurality of historical networking solutions, obtain a user feedback score of a historical user for a device of each model in each historical networking solution, and for a device of any model in the plurality of historical networking solutions, obtain user feedback information of the device of any model based on a user feedback score of the device of any model in different historical networking solutions. All devices of models in the plurality of historical networking solutions include devices of models in a set of available devices.

In a possible implementation, the processing unit 902 is specifically configured to: for any device in the set of available devices, filter, based on a device registration time point, a plurality of models registered by the any device within a preset time period, determine, based on a registration quantity of each of the plurality of models within the preset time period, an addition frequency of each of the plurality of models, determine, based on a quantity of online times of each of the plurality of models within the preset time period, a usage frequency of each of the plurality of models, and obtain, based on the addition frequency and the usage frequency, a popularity degree of each of the plurality of models.

In a possible implementation, the networking requirement further includes a verification requirement. The processing unit 902 is further configured to evaluate the networking solution based on the verification requirement, and display an evaluation result.

In a possible implementation, the verification requirement includes a verification subrequirement for model requirement matching and a verification subrequirement for connection relationship matching. The evaluation result includes a networking score of the networking solution. The processing unit 902 is specifically configured to: evaluate model requirement matching of each device in the networking solution based on the verification subrequirement for model requirement matching, to obtain a model requirement matching score of the networking solution, evaluate a connection relationship matching between devices in the networking solution based on the verification subrequirement for connection relationship matching, to obtain a connection relationship matching score of the networking solution, and obtain the networking score based on the model requirement matching score of the networking solution and the connection relationship matching score of the networking solution.

In a possible implementation, the evaluation result further includes a model requirement matching score of a device of each model in the networking solution and a connection relationship matching score corresponding to a connection line between every two devices in the networking solution.

In a possible implementation, the model requirement matching score of the device of each model and/or the connection relationship matching score corresponding to the connection line between the every two devices include/includes a scoring item whose score is less than a preset score. The processing unit 902 is further configured to receive a new networking requirement, and regenerate a networking solution based on the new networking requirement. The new networking requirement is a networking requirement adjusted based on a scoring item whose score is less than the preset score.

In a possible implementation, the processing unit 902 is further configured to: determine a plurality of target historical networking solutions from the plurality of historical networking solutions, where application scenes of the plurality of target historical networking solutions are the same as application scenes of the networking solutions; determine user feedback scores of a device of each model in the plurality of target historical networking solutions based on user feedback scores of a historical user on the plurality of target historical networking solutions; obtain statistics of the user feedback score of the device of each model in the plurality of target historical networking solutions, where the device of each model in the plurality of target historical networking solutions includes a device of each model in the networking solution, determine a user satisfaction score of the device of each model in the networking solution based on the statistics; and obtain a user satisfaction score of the networking solution based on the user satisfaction score of the device of each model in the networking solution, and display the user satisfaction score of the networking solution.

In a possible implementation, the processing unit 902 is specifically configured to: obtain a candidate networking score of the networking solution based on the model requirement matching score of the networking solution and the connection relationship matching score of the networking solution; obtain the statistics of the plurality of networking scores of the plurality of target historical networking solutions; and determine a networking score based on the candidate networking score and the statistics and according to a preset scoring rule.

In a possible implementation, the processing unit 902 is further configured to: generate a unique identifier of the networking solution and an adoption identifier of the user on the networking solution, obtain a user feedback score of the user on the networking solution, and associate and store the unique identifier, the adoption identifier of the user of the networking solution, and the user feedback score.

It should be noted that, for implementation of units of the networking apparatus 900 described in FIG. 9, refer to corresponding descriptions of embodiments shown in FIG. 2 to FIG. 6. In addition, for beneficial effects brought by the networking apparatus 900 described in FIG. 9, refer to corresponding descriptions of embodiments shown in FIG. 2 to FIG. 6. Details are not described herein again.

FIG. 10 is a schematic diagram of a structure of an electronic device 1000 according to an embodiment of this application. The electronic device 1000 includes a processor 1001, a memory 1002, and a communication interface 1003. The processor 1001, the memory 1002, and the communication interface 1003 are connected to each other via a bus 1004.

The memory 1002 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1002 is configured to store a related computer program and data. The communication interface 1003 is configured to receive and send data.

The processor 1001 may be one or more central processing units (central processing units, CPUs). When the processor 1001 is one CPU, the CPU may be a single-core CPU, or may be a multi-core CPU.

The electronic device may be a computer, a virtual machine, a server, a cloud device, or the like. The processor 1001 in the electronic device 1000 is configured to read computer program code stored in the memory 1002, to perform the method in any one of embodiments shown in FIG. 2 to FIG. 6.

It should be noted that, for implementation of operations of the electronic device 1000 described in FIG. 10, refer to corresponding descriptions of embodiments shown in FIG. 2 to FIG. 6. In addition, for beneficial effects brought by the electronic device 1000 described in FIG. 10, refer to corresponding descriptions of embodiments shown in FIG. 2 to FIG. 6.

Details are not described herein again.

Embodiments of this application further provide a chip, including a processor, configured to invoke a computer program from a memory and run the computer program, so that a device in which the chip is installed performs the method in any one of embodiments shown in FIG. 2 to FIG. 6.

Embodiments of this application further provide a computer-readable storage medium. The computer-readable storage medium stores a program and instructions that are executed by a device. When the program and the instructions are run on the electronic device, the method procedures shown in FIG. 2 to FIG. 6 are implemented.

Embodiments of this application further provide a computer program product, including a computer program. When the computer program is run by the electronic device, the method procedures shown in FIG. 2 to FIG. 6 are implemented.

It should be understood that, the processor mentioned in embodiments of this application may be a central processing unit (Central Processing Unit, CPU), or may be another general purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA, or another programmable logic device, a discrete gate or a transistor logic device, or a discrete hardware component, the memory (storage module) is integrated into the processor.

It should be noted that the memory described in this specification aims to include but is not limited to these memories and any memory of another proper model.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In embodiments of this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In text descriptions of this application, the character "/" generally represents an "or" relationship between the associated objects.

A sequence of steps of the method in embodiments of this application may be adjusted, combined, or removed based on an actual requirement.

Modules in the apparatus in embodiments of this application may be combined, divided, and deleted based on an actual requirement.

In conclusion, the foregoing embodiments are merely intended to describe the technical solutions of this application, but not to limit this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A networking method, wherein the method comprises:

   obtaining a networking requirement, wherein the networking requirement comprises a scene requirement, a coverage requirement, a device capability requirement, and a matching requirement between upstream and downstream devices;
   obtaining a networking structure based on the scene requirement;
   determining, based on the coverage requirement, the device capability requirement, and the matching requirement, a model of a device at each layer in the networking structure and a quantity corresponding to the model; and
   connecting devices at two adjacent layers in the networking structure to generate a networking solution.

2. The method according to claim 1, wherein the device capability requirement comprises a first device capability subrequirement and a second device capability subrequirement, the first device capability subrequirement indicates a capability requirement of a device at a first layer in the networking structure, the second device capability subrequirement indicates a capability requirement of a device at another layer other than the device at the first layer in the networking structure, and the determining, based on the coverage requirement, the device capability requirement, and the matching requirement, a model of a device at each layer in the networking structure and a quantity corresponding to the model comprises:

   determining, based on the coverage requirement and the first device capability subrequirement, a model of the device at the first layer and a quantity of devices corresponding to the model of the device at the first layer; and
   determining, based on the model of the device at the first layer, the quantity of devices corresponding to the model of the device at the first layer, the second device capability subrequirement, and the matching requirement, a model of the device at the another layer and a quantity of devices corresponding to the model of the device at the another layer.

3. The method according to claim 2, wherein the determining, based on the coverage requirement and the first device capability subrequirement, a model of the device at the first layer and a quantity of devices corresponding to the model of the device at the first layer comprises:

   determining a quantity of devices at the first layer based on the coverage requirement; and
   determining, based on the quantity of devices at the first layer and the first device capability subrequirement of the device at the first layer, one or more models of the device at the first layer and a quantity of devices corresponding to each of the one or more models of the device at the first layer.

4. The method according to any one of claims 1 to 3, wherein the determining, based on the coverage requirement, the device capability requirement, and the matching requirement, a model of a device at each layer in the networking structure and a quantity corresponding to the model comprises:

   obtaining user feedback information and popularity information of a device of each model in a set of available devices; and
   determining, based on the coverage requirement, the device capability requirement, the matching requirement, the user feedback information, and the popularity information, the model of the device at each layer in the networking structure and the quantity corresponding to the model.

5. The method according to claim 4, wherein the determining, based on the coverage requirement, the device capability requirement, the matching requirement, the user feedback information, and the popularity information, the model of the device at each layer in the networking structure and the quantity corresponding to the model comprises:

   determining, based on the quantity of devices at the first layer, the first device capability subrequirement, the user feedback information, and the popularity information, the one or more models of the device at the first layer and the quantity of devices corresponding to each of the one or more models of the device at the first layer; and determining, based on the model of the device at the first layer, the quantity of devices corresponding to the model of the device at the first layer, the second device capability subrequirement, the matching requirement, the user feedback information, and the popularity information, one or more models of the device at the another layer and a quantity of devices corresponding to the one or more models of the device at the another layer.

6. The method according to claim 4 or 5, wherein the obtaining user feedback information of a device of each model in a set of available devices comprises:

for each of a plurality of historical networking solutions, obtaining a user feedback score of a historical user for a device of each model in each historical networking solution; and
for a device of any model in the plurality of historical networking solutions, obtaining user feedback information of the device of the any model based on user feedback scores of the device of the any model in different historical networking solutions, wherein all devices of models in the plurality of historical networking solutions comprise the devices of the models in the set of available devices.

7. The method according to any one of claims 4 to 6, wherein the obtaining popularity information of a device of each model in a set of available devices comprises:

for any device in the set of available devices, filtering, based on a device registration time point, a plurality of models registered by the any device within a preset time period;
determining an addition frequency of each of the plurality of models based on a registration quantity of each of the plurality of models within the preset time period;
determining a usage frequency of each of the plurality of models based on a quantity of online times of each of the plurality of models within the preset time period; and
obtaining the popularity information of each of the plurality of models based on the addition frequency and the usage frequency.

8. The method according to any one of claims 1 to 7, wherein the networking requirement further comprises a verification requirement, and the method further comprises:
evaluating the networking solution based on the verification requirement, and displaying an evaluation result.

9. The method according to claim 8, wherein the verification requirement comprises a verification subrequirement for model requirement matching and a verification subrequirement for connection relationship matching, the evaluation result comprises a networking score of the networking solution, and the evaluating the networking solution based on the verification requirement comprises:

evaluating model requirement matching of each device in the networking solution based on the verification subrequirement for model requirement matching, to obtain a model requirement matching score of the networking solution;
evaluating a connection relationship matching between devices in the networking solution based on the verification subrequirement for connection relationship matching, to obtain a connection relationship matching score of the networking solution; and
obtaining the networking score based on the model requirement matching score of the networking solution and the connection relationship matching score of the networking solution.

10. The method according to claim 9, wherein the evaluation result further comprises a model requirement matching score of a device of each model in the networking solution and a connection relationship matching score corresponding to a connection line between every two devices in the networking solution.

11. The method according to claim 10, wherein the model requirement matching score of the device of each model and/or the connection relationship matching score corresponding to the connection line between the every two devices comprise/comprises a scoring item whose score is less than a preset score, and the method further comprises:

receiving a new networking requirement, wherein the new networking requirement is a networking requirement adjusted based on the scoring item whose score is less than the preset score; and
regenerating a networking solution based on the new networking requirement.

**12.** A networking apparatus, wherein the apparatus comprises an obtaining unit and a processing unit, wherein

the obtaining unit is configured to obtain a networking requirement, wherein the networking requirement comprises a scene requirement, a coverage requirement, a device capability requirement, and a matching requirement between upstream and downstream devices;
the processing unit is configured to obtain a networking structure based on the scene requirement;
the processing unit is further configured to determine, based on the coverage requirement, the device capability requirement, and the matching requirement, a model of a device at each layer in the networking structure and a quantity corresponding to the model; and
the processing unit is further configured to connect devices at two adjacent layers in the networking structure, to generate a networking solution.

**13.** The apparatus according to claim 12, wherein the device capability requirement comprises a first device capability subrequirement and a second device capability subrequirement, the first device capability subrequirement indicates a capability requirement of a device at a first layer in the networking structure, the second device capability subrequirement indicates a capability requirement of a device at another layer other than the device at the first layer in the networking structure, and the processing unit is specifically configured to:

determine, based on the coverage requirement and the first device capability subrequirement, a model of the device at the first layer and a quantity of devices corresponding to the model of the device at the first layer; and
determine, based on the model of the device at the first layer, the quantity of devices corresponding to the model of the device at the first layer, the second device capability subrequirement, and the matching requirement, a model of the device at the another layer and a quantity of devices corresponding to the model of the device at the another layer.

**14.** The apparatus according to claim 13, wherein the processing unit is specifically configured to:

determine a quantity of devices at the first layer based on the coverage requirement; and
determine, based on the quantity of devices at the first layer and the first device capability subrequirement of the device at the first layer, one or more models of the device at the first layer and a quantity of devices corresponding to each of the one or more models of the device at the first layer.

**15.** The apparatus according to any one of claims 12 to 14, wherein the processing unit is specifically configured to:

obtain user feedback information and popularity information of a device of each model in a set of available devices; and
determine, based on the coverage requirement, the device capability requirement, the matching requirement, the user feedback information, and the popularity information, the model of the device at each layer in the networking structure and the quantity corresponding to the model.

**16.** The apparatus according to claim 15, wherein the processing unit is specifically configured to:

determine, based on the quantity of devices at the first layer, the first device capability subrequirement, the user feedback information, and the popularity information, the one or more models of the device at the first layer and the quantity of devices corresponding to each of the one or more models of the device at the first layer; and
determine, based on the model of the device at the first layer, the quantity of devices corresponding to the model of the device at the first layer, the second device capability subrequirement, the matching requirement, the user feedback information, and the popularity information, one or more models of the device at the another layer and a quantity of devices corresponding to the one or more models of the device at the another layer.

**17.** The apparatus according to claim 15 or 16, wherein the processing unit is specifically configured to:

for each of a plurality of historical networking solutions, obtain a user feedback score of a historical user for a device of each model in each historical networking solution; and
for a device of any model in the plurality of historical networking solutions, obtain user feedback information of the device of the any model based on user feedback scores of the device of the any model in different historical networking solutions, wherein all devices of models in the plurality of historical networking solutions comprise the devices of the models in the set of available devices.

18. The apparatus according to any one of claims 12 to 17, wherein the networking requirement further comprises a verification requirement, and the processing unit is further configured to:
evaluate the networking solution based on the verification requirement, and display an evaluation result.

19. The apparatus according to claim 18, wherein the verification requirement comprises a verification subrequirement for model requirement matching and a verification subrequirement for connection relationship matching, the evaluation result comprises a networking score of the networking solution, and the processing unit is specifically configured to:

evaluate model requirement matching of each device in the networking solution based on the verification subrequirement for model requirement matching, to obtain a model requirement matching score of the networking solution;
evaluate a connection relationship matching between devices in the networking solution based on the verification subrequirement for connection relationship matching, to obtain a connection relationship matching score of the networking solution; and
obtain the networking score based on the model requirement matching score of the networking solution and the connection relationship matching score of the networking solution.

20. The apparatus according to claim 19, wherein the evaluation result further comprises a model requirement matching score of a device of each model in the networking solution and a connection relationship matching score corresponding to a connection line between every two devices in the networking solution.

21. The apparatus according to claim 20, wherein the model requirement matching score of the device of each model and/or the connection relationship matching score corresponding to the connection line between the every two devices comprise/comprises a scoring item whose score is less than a preset score, and the processing unit is further configured to:

receive a new networking requirement, wherein the new networking requirement is a networking requirement adjusted based on the scoring item whose score is less than the preset score; and
regenerate a networking solution based on the new networking requirement.

22. An electronic device, comprising a processor and a memory, wherein

the memory is configured to store a computer program; and
the processor is configured to execute the computer program stored in the memory, to enable the electronic device to perform the method according to any one of claims 1 to 11.

23. A computer-readable storage medium, comprising a program or instructions, wherein when the program or the instructions are run on a processor, the method according to any one of claims 1 to 11 is performed.

24. A computer program product, comprising a computer program, wherein when the computer program is run on an electronic device, the electronic device is enabled to perform the method according to any one of claims 1 to 11.

Cloud management database

Device model database

Networking detail database

**Networking recommendation module**

Device model recommendation submodule

Networking generation submodule

Networking evaluation submodule

**User interaction module**

Requirement input submodule

Networking output submodule

User scoring submodule

FIG. 1

Obtain a networking requirement, where the networking requirement includes a scene requirement, a coverage requirement, a device capability requirement, and a matching requirement between upstream and downstream devices — 201

Obtain a networking structure based on the scene requirement — 202

Determine, based on the coverage requirement, the device capability requirement, and the matching requirement, a model of a device at each layer in the networking structure and a quantity corresponding to the model — 203

Connect devices at two adjacent layers in the networking structure, to generate a networking solution — 204

FIG. 2

```
inputs = {
    "wired_num":100,
    "ap_num":100,
    "Quality":"High",
    "IoT":"Y",
    "Scene":"Supermarket",
    "Video_monitor":"Y",
    "Distributed":"N",
    "Plate":"N"
}
```

FIG. 3

FIG. 4

Internet

AR           AR

ACC  ACC      ACC  ACC

| AP  AP | AP  AP | AP  AP | AP  AP |
|:---:|:---:|:---:|:---:|
| Wired<br>terminal | Wired<br>terminal | Wired<br>terminal | Wired<br>terminal |

...

FIG. 5

---

Obtain a networking requirement, where the networking requirement includes a scene requirement, a coverage requirement, a device capability requirement, a matching requirement between upstream and downstream devices, and a verification requirement   601

↓

Obtain a networking structure based on the scene requirement   602

↓

Determine, based on the coverage requirement, the device capability requirement, and the matching requirement, a model of a device at each layer in the networking structure and a quantity corresponding to the model   603

↓

Connect devices at two adjacent layers in the networking structure, to generate a networking solution   604

↓

Evaluate the networking solution based on the verification requirement, and display an evaluation result   605

FIG. 6

Basic information

Supermarket name [                    ]

Wired terminals [          100          ]

Total area [          3000          ] m²

Passenger flow [        1000        ] person-times/day

Quality [ High ]    [ Middle ]    [ Low ]

Network service

| | |
|---|---|
| ✓ Wired office | ✓ Office WiFi |
| ✓ Visitor WiFi | ✓ Electronic price tag |
| ✓ Handheld PDA | ✓ Camera |
| ✓ Electronic scale | ✓ Cashier |

FIG. 7A

```
intents = {
    'Scene':'Supermarket',
    'Quality':'High',
    'Wired terminal':100,
    'Total area':3000,
    'Passenger flow':1000,
    'Wired office':'Y',
    'Office WiFi':'Y',
    'Visitor WiFi':'Y',
    'Electronic price tag':'Y',
    'Cashier':'Y',
    'Electronic scale':'Y',
    'Handheld PDA':'Y',
    'Camera':'Y'
}
```

FIG. 7B

```
inputs = {
    'wired_num':100,
    'ap_num':100,
    'Quality':'High',
    'IoT':'Y',
    'Scene':'Supermarket',
    'Video_monitor':'Y',
    'Distributed':'N',
    'Plate':'N'
}
```

FIG. 7C

FIG. 8

EP 4 510 510 A1

Networking apparatus 900

— 901

Obtaining
unit

— 902

Processing
unit

FIG. 9

Electronic
device 1000

— 1001

Processor

— 1002

Memory

— 1004

— 1003

Communication
interface

FIG. 10

## INTERNATIONAL SEARCH REPORT

| | |
|---|---|
| | International application No. |
| | **PCT/CN2023/092748** |

### A. CLASSIFICATION OF SUBJECT MATTER

H04L12/28(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, SIPOABS, DWPI, WOTXT, USTXT, EPTXT, CNKI, IEEE, 3GPP: 组网, 布局, 规划, 部署, 开局, 需求, 方案, 拓扑, 结构, 选材, 选型, 类型, 数量, 场景, scene, demand, topology, device, style, level

### C. DOCUMENTS CONSIDERED TO BE RELEVANT

| Category* | Citation of document, with indication, where appropriate, of the relevant passages | Relevant to claim No. |
|---|---|---|
| X | CN 110875861 A (CHINA MOBILE (HANGZHOU) INFORMATION TECHNOLOGY CO., LTD. et al.) 10 March 2020 (2020-03-10) description, paragraphs [0146]-[0344], and claims 13-14 | 1-24 |
| X | CN 111917591 A (SHENZHEN ORVIBO TECHNOLOGY CO., LTD.) 10 November 2020 (2020-11-10) description, paragraphs [0026]-[0109] | 1-24 |
| A | CN 113453238 A (CHINA UNITED NETWORK COMMUNICATIONS GROUP CO., LTD. et al.) 28 September 2021 (2021-09-28) entire document | 1-24 |
| A | US 2014141788 A1 (AT & T INTELLECTUAL PROPERTY I, L.P.) 22 May 2014 (2014-05-22) entire document | 1-24 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 July 2023** | **31 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/092748**

| Patent document cited in search report | | | Publication date (day/month/year) | Patent family member(s) | | | Publication date (day/month/year) |
|---|---|---|---|---|---|---|---|
| CN | 110875861 | A | 10 March 2020 | CN | 110875861 | B | 01 July 2022 |
| CN | 111917591 | A | 10 November 2020 | CN | 111917591 | B | 28 April 2023 |
| CN | 113453238 | A | 28 September 2021 | CN | 113453238 | B | 12 August 2022 |
| US | 2014141788 | A1 | 22 May 2014 | US | 9848337 | B2 | 19 December 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210509866X